# EUROPÄISCHE PATENTSCHRIFT

(11) **EP 3 653 360 B1**
(45) Veröffentlichungstag und Bekanntmachung des Hinweises auf die Patenterteilung: **28.08.2024**
(21) Anmeldenummer: 19201587.3
(22) Anmeldetag: 07.10.2019
(51) Int. Cl.: B29C 48/70, B29C 48/21, B29C 48/49, B29C 48/07, B29C 48/305, B29D 30/06, B29C 48/19

(54) **VORFORM-VORRICHTUNG UND VERFAHREN ZUR HERSTELLUNG EINES FAHRZEUGLUFTREIFENS MIT EINEM LAUFSTREIFENABSCHNITT MIT MINDESTENS ZWEI GUMMIKOMPONENTEN**
PREFORM DEVICE AND METHOD FOR PRODUCING A VEHICLE TYRE WITH A STRIP COMPRISING AT LEAST TWO RUBBER COMPONENTS
DISPOSITIF DE PRÉFORME ET PROCÉDÉ DE FABRICATION DE PNEUMATIQUE DE VÉHICULE DOTÉ D'UNE SECTION DE BANDE DE ROULEMENT POURVUE D'AU MOINS DEUX COMPOSANTS EN CAOUTCHOUC

(30) Priorität: 16.11.2018 DE 102018219640
(43) Veröffentlichungstag der Anmeldung: 20.05.2020
(73) Patentinhaber: Continental Reifen Deutschland GmbH, 30175 Hannover (DE)
(72) Erfinder: Steiner, Frank Stefan, 30165 Hannover (DE); Kloss, Daniel, 30165 Hannover (DE); Sharifi, Monir, 30165 Hannover (DE); Wagener, Tobias, 30165 Hannover (DE)
(74) Vertreter: Continental Corporation

(56) Entgegenhaltungen:
- EP-A1- 1 388 405
- EP-A1- 2 567 802
- EP-A2- 2 174 770
- EP-B1- 2 567 802
- WO-A1-2016/173728
- CN-A- 107 186 967
- DE-A1- 102004 052 351
- DE-A1- 102014 223 160
- KR-B1- 101 405 064

## Beschreibung

Die Erfindung betrifft eine Vorform-Vorrichtung zur Verwendung in einer Extrusionsvorrichtung, umfassend zumindest einen ersten Laufstreifenkanal mit einer ersten Mündungsöffnung und einen zweiten Laufstreifenkanal mit einer zweiten Mündungsöffnung. Die Erfindung betrifft auch einen Fahrzeugluftreifen, ein Verfahren zur Herstellung eines Fahrzeugluftreifens mit einem Laufstreifenabschnitt mit mindestens zwei Gummikomponenten sowie die Verwendung der Vorform-Vorrichtung und einer Mündungstrennwand der Vorform-Vorrichtung.

An den Laufstreifen eines Fahrzeugluftreifens werden unterschiedliche Anforderungen gestellt. Da der Laufstreifen, insbesondere die Cap des Laufstreifens, unmittelbaren Kontakt mit der Fahrbahn hat, ist es wesentlich, dass die radial äußere Oberfläche des Laufstreifens über die gesamte Nutzungsdauer vorteilhafte Eigenschaften bezüglich Haftung, Griff und Bremseigenschaften aufweist. Weiter sind gutes Fahrverhalten bei verschiedenen Untergrundbeschaffenheiten sowie ein geringer Rollwiderstand von Vorteil. Bei Reifen, die unter winterlichen Fahrbedingungen eingesetzt werden sollen, sollen vorteilhafte Eigenschaften bzgl. Schneefahrverhalten, Trockenfahrverhalten, Naßbremseigenschaften, Kurvensteifigkeit und Rollwiderstand sichergestellt sein.

Im Allgemeinen lassen sich Laufstreifen hinsichtlich dieser Eigenschaften nicht so ausführen, dass alle Eigenschaften gleichermaßen verbessert sind. Bekannt sind Reifen, deren Laufstreifenoberfläche Bereiche mit unterschiedlichen Kautschukmischungen aufweisen. Bisweilen ist es jedoch schwer die unterschiedlichen Eigenschaften in einer Kautschukmischung zu vereinen oder unabhängig voneinander genau einzustellen. So kommt es im Stand der Technik wie in den Druckschriften DE 10 2004 052351 A1, EP 1 388 405 A1, EP 2 567 802 A1 und EP 2 174 770 A2 offenbart häufig vor, dass eine erste Kautschukmischung nur ein gutes Fahrverhalten auf trockener Fahrbahn und eine zweite Kautschukmischung nur ein gutes Fahrverhalten auf schneebedeckter Fahrbahn aufweist, da bestimmte Eigenschaften der ersten und zweiten Kautschukmischung sich gegenseitig beeinflussen und somit eine ideale Kautschukmischung verhindern. Dies wird beispielsweise in dem bekannten "Magischen Dreieck" des Autoreifens veranschaulicht.

Aus der DE 102015207931 A1 ist ein Fahrzeugluftreifen mit einem Laufstreifen bekannt, "wobei der Laufstreifenabschnitt einen Materialstreifen, welcher in etwa in Umfangsrichtung helixförmig in Windungen angeordnet ist, aufweist, wobei der Materialstreifen im Bereich des Laufstreifenabschnitts in seiner Längsrichtung zumindest zwei Schichten aufweist, wobei die erste Schicht aus einer ersten Kautschukmischung und die zweite Schicht aus einer dazu verschiedenen zweiten Kautschukmischung gebildet ist und wobei die erste Schicht und die zweite Schicht die radial äußere Oberfläche des Laufstreifenabschnitts mit der radial inneren Oberfläche des Laufstreifenabschnitts verbinden dadurch gekennzeichnet, dass die erste Kautschukmischung und die zweite Kautschukmischung im vulkanisierten Zustand in etwa die gleiche Shore-A-Härte, ermittelt bei Raumtemperatur gemäß DIN ISO 7619-1, aufweisen und dass sich die erste Kautschukmischung und die zweite Kautschukmischung im vulkanisierten Zustand in zumindest einer weiteren physikalischen Eigenschaft unterscheiden" (s. Anspruch 1).

Ein anderer Reifen ist aus der EP 0 875 367 A2 bekannt. Hierbei erstreckt sich der Laufstreifenabschnitt über die gesamte axiale Breite des Laufstreifens und die Kautschukmischungen der beiden Schichten des Materialstreifens unterscheiden sich in ihrer Härte. Durch diese Kombination aus Kautschukmischungen unterschiedlicher Härte und somit mit unterschiedlichem Abriebverhalten soll der Reifen bei einfacher Herstellung eine vorteilhafte Haftung aufweisen. Kautschukmischungen mit geringer Härte weisen allerdings üblicherweise ein unvorteilhaftes Trockenfahrverhalten auf.

Der Erfindung liegt die Aufgabe zugrunde, einen Fahrzeugreifen und ein entsprechendes Herstellungsverfahren für einen Fahrzeugtreifen zur Verfügung zu stellen, wobei bei dem hergestellten Fahrzeugreifen Zielkonflikte durch die gezielte Verwendung von unterschiedlich hergestellten Gummimischungen entkoppelt werden können. Ein Beispiel eines solchen Zielkonfliktes ist der Zielkonflikt zwischen Schneefahrverhalten und Rollwiderstand. Ein weiteres Ziel ist es, die Eigenschaften beim Fahren auf schneebedeckter Fahrbahnoberfläche zu verbessern ohne die Eigenschaften beim Fahren auf trockener Fahrbahnoberfläche vorzugsweise zu verschlechtern.

Gelöst wird diese Aufgabe erfindungsgemäß durch eine Vorform-Vorrichtung gemäß dem Anspruch 1 zum Herstellen eines Extrudats in Form eines Endlosstreifens mit mindestens zwei in horizontaler Richtung nacheinander angeordneten Gummikomponenten, umfassend zumindest
- einen ersten Laufstreifenkanal mit einer ersten Mündungsöffnung, wobei die erste Mündungsöffnung einen, zwei, drei, vier, fünf, sechs, sieben, acht, neun oder mehr als neun einzelne Mündungsöffnungsabschnitte aufweist,
   und
- einen zweiten Laufstreifenkanal mit einer zweiten Mündungsöffnung, wobei die zweite Mündungsöffnung einen, zwei, drei, vier, fünf, sechs, sieben, acht, neun oder mehr als neun einzelne Mündungsöffnungsabschnitte aufweist,
wobei die Mündungsöffnungsabschnitte der ersten Mündungsöffnung und die Mündungsöffnungsabschnitte der zweiten Mündungsöffnung an der zum Kontakt mit einer Endform-Vorrichtung vorgesehene Seite der Vorform-Vorrichtung so angeordnet sind, dass ein Extrudat mit einem Profilquerschnitt mit mindestens zwei, mindestens drei oder mindestens vier in horizontaler Richtung nacheinander angeordneten Gummikomponenten in Form von sich in Extrusionsrichtung erstreckenden Streifen hergestellt werden kann.

Es ist eine große Leistung der vorliegenden Erfindung, mittels der erfindungsgemäßen Vorrichtung einen Endlos-Streifen, d.h. ein Extrudat in Form eines Endlosstreifens, mit verschiedenen in Extrusionsrichtung verlaufenden Streifen mit genau definierten Breiten und Höhen und aus mindestens zwei verschieden zusammengesetzten Gummikomponenten herstellen zu können. Mit solchen Endlosstreifen können Reifen mit mindestens zwei verschiedenen Gummikomponenten (im Folgenden "erste Gummikomponente" und "zweite Gummikomponente" genannt) im Laufstreifen bereitstellen, wobei die Gummikomponenten ringförmig sind und axial symmetrisch um die Achse des Fahrzeugluftreifens verlaufen. Hierdurch können die einzelnen Ringe der zwei verschiedenen Gummikomponenten im hergestellten Fahrzeugreifen
- in ihrer Kautschukzusammensetzung,
- in ihrer Breite entlang der axialen Richtung oder entlang der Umfangsrichtung und/oder
- in ihrer Höhe entlang der axialen Richtung oder entlang der Umfangsrichtung problemlos variiert werden. Dies führt dazu, dass die Lauffläche genau definierte Anteile an der ersten und zweiten Gummikomponente hat und die ersten und zweiten Gummikomponenten insbesondere eine größere Stabilität gegenüber helixförmig gewickelten Streifen, d.h. Gummikomponenten, aufweisen. Dies ermöglicht eine noch nie erreichte Kontrolle über wichtige Reifeneigenschaften eines erfindungsgemäßen Fahrzeugreifens.

Hierdurch kann einerseits der Laufstreifen eines erfindungsmäßen Fahrzeugreifens auf einen bestimmten Untergrund oder verschiedene Untergründe noch genauer eingestellt werden und gleichzeitig andere Reifeneigenschaften wie der Rollwiderstand unabhängig geändert werden.

Andererseits kann durch eine Variation der Breiten der Mündungsöffnungsabschnitte entlang der horizontalen Richtung in einer erfindungsgemäßen Vorrichtung auch die Eigenschaften an einem seitlichen Ende des Laufstreifens eines erfindungsgemäßen Fahrzeugreifens sowohl auf die Bremseigenschaften in den Kurven auf das Fahrverhalten in den Kurven eines erfindungsgemäßen Fahrzeugreifens angepasst werden, während die Bremseigenschaften des mittleren Teils des Laufstreifens um den Reifenäquator des Fahrzeugreifens unabhängig davon angepasst werden können. Somit wird das Verhalten des Fahrzeugreifens in den Kurven durch das Anpassen der seitlichen Enden der Lauffläche eines Fahrzeugreifens und gleichzeitig das Bremsverhalten auf gerader Strecke verbessert. Ein erfindungsgemäßer Fahrzeugreifen ermöglicht somit eine noch zuvor unbekannte Optimierung eines Fahrzeugreifens, da die seitlichen Enden und die Mitte eines Laufstreifens unabhängig voneinander und punkt genau angepasst werden können. Diese Entkopplung stellt einen wesentlichen Beitrag der vorliegenden Erfindung dar und ist ein langersehntes Bedürfnis.

Im Rahmen der vorliegenden Erfindung wird die erste Mündungsöffnung einer erfindungsgemäßen Vorrichtung durch sämtliche einzelnen und voneinander räumlich getrennten Mündungsöffnungsabschnitte der ersten Mündungsöffnung gebildet. Bei Verwendung einer erfindungsgemäßen Vorrichtung wird daher bevorzugt eine erste Kautschukmischung durch den ersten Laufstreifenkanal und durch die daran anschließende erste Mündungsöffnung hin zu einer Endleiste zum Ausformen eines Extrudats aus der ersten und zweiten Kautschukmischung geleitet.

Im Rahmen der vorliegenden Erfindung wird die zweite Mündungsöffnung einer erfindungsgemäßen Vorrichtung durch sämtliche einzelnen und voneinander räumlich getrennten Mündungsöffnungsabschnitte der zweiten Mündungsöffnung gebildet. Bei Verwendung einer erfindungsgemäßen Vorrichtung wird daher bevorzugt eine zweite Kautschukmischung durch den zweiten Laufstreifenkanal und durch die daran anschließende zweite Mündungsöffnung hin zu der Endleiste zum Ausformen eines Extrudats aus der ersten und zweiten Kautschukmischung geleitet.

Bevorzugt ist eine erfindungsgemäße Vorrichtung wie vorstehend beschrieben oder wie vorstehend als bevorzugt beschrieben, wobei die Querschnitte der Mündungsöffnungsabschnitte der ersten und zweiten Mündungsöffnung trapezförmig oder bestenfalls rechteckig sind, wobei eine oder beide Seitenkanten des Trapezes bevorzugt einen Winkel mit der vertikalen Richtung von maximal 10° bilden, besonders bevorzugt im Bereich von maximal 5°, ganz besonders bevorzugt im Bereich von maximal 2°, und die Grundkanten des Trapezes parallel zur horizontalen Richtung verlaufen. Die Querschnittsebene der Querschnitte der Mündungsöffnungsabschnitte der ersten und zweiten Mündungsöffnung sind hierbei senkrecht zur Extrusionsrichtung. Diese erfindungsgemäße Vorrichtung ermöglicht es Endlostreifen zur Herstellung eines Laufstreifens eines Fahrzeugreifens zu extrudieren, welche die Nachteile eines im Stand der Technik bekannten Fahrzeugreifens nicht aufweist.

Die Querschnittsebene, d.h. die Schnittebene des Querschnitts, eines vorstehend beschriebenen Querschnitts oder eines Extrudats verläuft im Rahmen der vorliegenden Erfindung bevorzugt senkrecht zur Extrusionsrichtung und wird auch als Profilquerschnitt bezeichnet. Ein Querschnitt mit einer Querschnittsebene senkrecht zur vertikalen Richtung wird im Rahmen der vorliegenden Erfindung horizontaler Querschnitt genannt. Ein Querschnitt mit einer Querschnittsebene senkrecht zur horizontalen Richtung wird im Rahmen der vorliegenden Erfindung vertikaler Querschnitt genannt.

Insbesondere wenn die erste Gummikomponente und die zweite Gummikomponente nicht ringförmig, sondern beispielsweise helix- oder spiralförmig sind oder nicht achsensymmetrisch um die Achse des Fahrzeugreifens verlaufen, treten verschiedene Probleme im Vergleich zu einem erfindungsgemäßen Fahrzeugluftreifen auf. Dies sind beispielsweise, dass das im Stand der Technik verwendete Herstellungsverfahren, insbesondere das verwendete Strip-Windung, häufig dazu führt, dass die Axialquerschnitte der ersten und zweiten Gummikomponente bestenfalls trapezförmig oder gar noch unregelmäßiger sind, wobei eine oder beide Seitenkanten des Trapezes eines besagten Axialquerschnittes einen Winkel mit der radialen Richtung von über 10° bilden und die Grundkanten des Trapezes parallel zur axialen Richtung verlaufen.

Es kommt zudem vor, dass durch das spiralförmige Aufwickeln keine Laufstreifen mit gleichförmigen Querschnitten gebildet werden können, da die Geometrie der ersten und zweiten Gummikomponente bei mit Strip-Winding hergestellten Reifen nicht so gut kontrolliert werden kann wie bei erfindungsgemäßen Fahrzeugreifen. Dies führt zu Abweichungen in den vorbestimmten Breiten und Höhen der ersten und zweiten Gummikomponente in den im Stand der Technik bekannten Reifen und somit zu den vorstehend beschriebenen trapezförmigen Axialquerschnitten der Gummikomponenten eines so hergestellten Fahrzeugreifens. Mit einer erfindungsgemäßen Vorrichtung und insbesondere mit einem erfindungsgemäßen Herstellungsverfahren können solche Nachteile in einem Fahrzeugreifen vermieden werden.

Insbesondere jedoch können die vor- und nachstehend besprochenen Vorteile dann erreicht werden, wenn die vorstehend beschriebene Kontrolle der genau definierten Breiten und Höhen der ersten und zweiten Gummikomponente eines erfindungsgemäßen Fahrzeugreifens mittels Einstellung der Breiten und Höhen der Mündungsöffnungsabschnitte der ersten und zweiten Mündungsöffnung eingestellt werden. Dies wird im Rahmen der vorliegenden Erfindung dadurch erreicht, dass die Breiten und Höhen der Mündungsöffnungsabschnitte der ersten und zweiten Mündungsöffnung in einer erfindungsgemäßen Vorrichtung genau eingestellt werden können und somit ein entsprechender Endlosstreifen zur Herstellung eines Laufstreifens mit ersten und zweiten, ringförmig ausgebildeten Gummikomponenten wie vorstehend beschrieben sind. Erst die ringförmige Form gibt den einzelnen Gummikomponenten der ersten und zweiten Gummikomponente eine ausreichende Stabilität. Diese ringförmige Form konnte jedoch erst durch eine erfindungsmäße Vorrichtung mit genau definierten Mündungsöffnungsabschnitte der ersten und zweiten Mündungsöffnung erreicht werden, mit der ein Endlosstreifen mit genau definierten Breiten und Höhen einer ersten und einer zweiten Gummikomponente erreicht werden konnte.

Die genau Kontrolle der Geometrie der Mündungsöffnungsabschnitte einer erfindungsgemäßen Vorrichtung und somit die genau Kontrolle der Geometrie auch der ersten und zweiten Gummikomponente eines erfindungsgemäßen Fahrzeugreifens führt zudem auch dazu, dass die Kontaktfläche eines erfindungsgemäßen Fahrzeugreifens genau den Oberflächenanteil an erster und zweiter Gummikomponente aufweist, der durch die eingestellten Gewichtsanteile der ersten und zweiten Gummikomponente im Laufstreifenabschnitt des erfindungsgemäßen Fahrzeugreifens anvisiert wurden.

Im Rahmen der vorliegenden Erfindung ist die Extrusionsrichtung die Richtung, in die der Laufstreifen in Form eines Endlos-Streifens beim Passieren der Mündungsöffnung des ersten und zweiten Laufstreifenkanals transportiert wird. In einem Koordinatensystem, welches auf die Dimensionen des Laufstreifens des resultierenden Fahrzeugluftreifen ausgerichtet ist, entspricht die Extrusionsrichtung beim Endlos-Streifen später der Umfangsrichtung des resultierenden Fahrzeugluftreifens.

Im Rahmen der vorliegenden Erfindung ist die vertikale Richtung die Richtung, welche senkrecht zur Extrusionsrichtung verläuft und bei einer erfindungsgemäßen Verwendung einer erfindungsgemäßen Vorform-Vorrichtung vertikal, als parallel zur Gravitationskraft, verläuft. In einem Koordinatensystem, welches auf die Dimensionen des Laufstreifens ausgerichtet ist, entspricht die vertikale Richtung beim Endlos-Streifen der radialen Richtung beim resultierenden Fahrzeugluftreifen. Die Fläche der ersten und zweiten Mündungsöffnung einer erfindungsgemäßen Vorrichtung verläuft definitionsgemäß im Rahmen der vorliegenden Erfindung bevorzugt senkrecht zur Extrusionsrichtung.

Im Rahmen der vorliegenden Erfindung ist die horizontale Richtung die Richtung, welche senkrecht zur Extrusionsrichtung verläuft und bei einer erfindungsgemäßen Verwendung einer erfindungsgemäßen Vorform-Vorrichtung horizontal verläuft. In einem Koordinatensystem, welches auf die Dimensionen des Laufstreifens ausgerichtet ist, entspricht die horizontale Richtung beim Endlos-Streifen der axialen Richtung es resultierenden Fahrzeugluftreifens.

Im Rahmen der vorliegenden Erfindung werden die Begriffe "horizontale Richtung", "vertikale Richtung" und "Extrusionsrichtung" in Bezug auf das Extrudat oder die erfindungsgemäße Vorrichtung gebraucht, insbesondere wenn das Extrudat in Form eines Endlos-Streifens zur Herstellung von Laufstreifen für Fahrzeugluftreifen vorliegt.

Im Rahmen der vorliegenden Erfindung werden die Begriffe "axiale Richtung", "radiale Richtung" und "Umfangsrichtung" in Bezug auf den Laufstreifen gebraucht, wenn das Extrudat bereits im Reifenrohling oder im Fahrzeugluftreifen, vorzugsweise als Laufstreifen, verarbeitet ist.

Im Rahmen der vorliegenden Erfindung kann eine erfindungsgemäße Vorform-Vorrichtung auch nur als Vorrichtung bezeichnet werden und umfasst insbesondere auch eine Vorform-Vorrichtung zum Anordnen von Gummikomponenten sein, wobei die Vorform-Vorrichtung bevorzugt direkt vor einer Extruder-Endform angeordnet ist.

Bevorzugt ist eine der zwei erfindungsgemäßen Vorrichtung wie vorstehend beschrieben oder wie vorstehend als bevorzugt beschrieben, wobei die Vorrichtung einen dritten, vierten, fünften Laufstreifenkanal oder weitere Laufstreifenkanäle umfasst, wobei ein dritter und vierter Laufstreifenkanal bevorzugt einen oder zwei Wing-Komponentenkanäle sind.

Erfindungsgemäß gelöst wird die Aufgabe auch durch eine Vorform-Vorrichtung zur

Herstellung eines Laufstreifenabschnittes gemäß dem Anspruch 1 mit mindestens zwei in horizontaler Richtung nacheinander angeordneten Gummikomponenten, umfassend
- einen ersten Laufstreifenkanal mit einer ersten Mündungsöffnung, wobei die erste Mündungsöffnung einen, zwei, drei, vier, fünf, sechs, sieben, acht, neun oder mehr als neun Mündungsöffnungsabschnitte aufweist,
   und
- einen zweiten Laufstreifenkanal mit einer zweiten Mündungsöffnung, wobei die zweite Mündungsöffnung einen, zwei, drei, vier, fünf, sechs, sieben, acht, neun oder mehr als neun Mündungsöffnungsabschnitte aufweist,
wobei ein horizontaler Querschnitt der Vorform-Vorrichtung
- in horizontaler Richtung nacheinander angeordnete Laufstreifenkanalabschnitte aufweist, wobei die in horizontaler Richtung nacheinander angeordneten Laufstreifenkanalabschnitte alternierend zum ersten und zum zweiten Laufstreifenkanal gehören,
   und/oder
- in horizontaler Richtung nacheinander angeordnete Mündungsöffnungsabschnitte aufweist, wobei die in horizontaler Richtung nacheinander angeordneten Mündungsöffnungsabschnitte alternierend zur ersten und zur zweiten Mündungsöffnung gehören

Bevorzugt ist eine der zwei erfindungsgemäßen Vorrichtung wie vorstehend beschrieben oder wie vorstehend als bevorzugt beschrieben, wobei ein horizontaler Querschnitt der Vorform-Vorrichtung
- in horizontaler Richtung nacheinander angeordnete Laufstreifenkanalabschnitte aufweist, wobei die in horizontaler Richtung nacheinander angeordneten Laufstreifenkanalabschnitte alternierend zum ersten und zum zweiten Laufstreifenkanal gehören,
   und/oder
- in horizontaler Richtung nacheinander angeordnete Mündungsöffnungsabschnitte aufweist, wobei die in horizontaler Richtung nacheinander angeordneten Mündungsöffnungsabschnitte alternierend zur ersten und zur zweiten Mündungsöffnung gehören.

Vorteile des vorstehend beschriebenen Aspekts der vorliegenden Erfindung sind vorstehend beschrieben. Ein weiterer Vorteil des vorstehend beschriebenen Aspekts der vorliegenden Erfindung ist, dass die Strömungswiederstände der Gummikomponenten verkleinert werden, wenn nicht nur die nacheinander angeordneten Mündungsöffnungsabschnitte sondern bereits schon die in horizontaler Richtung nacheinander angeordnete Laufstreifenkanalabschnitte vor den Mündungsöffnungen entsprechend angeordnet sind, insbesondere parallel zueinander verlaufen. Erfindungsgemäß gelöst wird die Aufgabe auch durch eine Vorform-Vorrichtung zur

Herstellung eines Laufstreifenabschnittes gemäß dem Anspruch 1 mit mindestens zwei in horizontaler Richtung nacheinander angeordneten Gummikomponenten, umfassend:
- einen ersten Laufstreifenkanal mit einer ersten Mündungsöffnung, wobei die erste Mündungsöffnung einen, zwei, drei, vier, fünf, sechs, sieben, acht, neun oder mehr als neun Mündungsöffnungsabschnitte aufweist,
   und
- einen zweiten Laufstreifenkanal mit einer zweiten Mündungsöffnung, wobei die zweite Mündungsöffnung einen, zwei, drei, vier, fünf, sechs, sieben, acht, neun oder mehr als neun Mündungsöffnungsabschnitte aufweist,
wobei mindestens ein Mündungsöffnungsabschnitt der ersten Mündungsöffnung von mindestens zwei Mündungsöffnungsabschnitten der zweiten Mündungsöffnung begrenzt wird und/oder mindestens ein Mündungsöffnungsabschnitt der zweiten Mündungsöffnung von mindestens zwei Mündungsöffnungsabschnitten der ersten Mündungsöffnung begrenzt wird.

Bevorzugt ist eine der vier erfindungsgemäßen Vorrichtung wie vorstehend beschrieben oder wie vorstehend als bevorzugt beschrieben, wobei mindestens ein Mündungsöffnungsabschnitt der ersten Mündungsöffnung von mindestens zwei Mündungsöffnungsabschnitten der zweiten Mündungsöffnung begrenzt wird und/oder mindestens ein Mündungsöffnungsabschnitt der zweiten Mündungsöffnung von mindestens zwei Mündungsöffnungsabschnitten der ersten Mündungsöffnung begrenzt wird. Besonders bevorzugt erfolgt die besagte Begrenzung der Mündungsöffnungsabschnitte der ersten und zweiten Mündungsöffnung durch eine einteilige oder mehrteilige und bevorzugt modular entnehmbare Trennwand.

Vorteile des vorstehend beschriebenen Aspekts der vorliegenden Erfindung sind vorstehend beschrieben. Ein weiterer Vorteil des vorstehend beschriebenen Aspekts der vorliegenden Erfindung ist, dass die Mündungsöffnungsabschnitte der ersten Mündungsöffnung und die Mündungsöffnungsabschnitte der zweiten Mündungsöffnung durch eine einzige Trennwand getrennt werden. Hierdurch wird der Aufbau der erfindungsgemäßen Vorrichtung platzsparender. Außerdem kann durch die Verwendung einer einteiligen oder mehrteiligen Trennwand für die Begrenzung der Mündungsöffnungsabschnitte der ersten und zweiten Mündungsöffnung diese modular entnommen werden und durch eine andere Trennwand mit anderer Geometrie ersetzt werden. So können kleine Änderungen der Geometrie des hergestellten Laufstreifens schnell und problemlos erfolgen.

Bevorzugt ist eine erfindungsgemäße Vorrichtung wie vorstehend beschrieben oder wie vorstehend als bevorzugt beschrieben, wobei
- mindestens zwei, mindestens drei oder sämtliche Laufstreifenkanalabschnitte des ersten Laufstreifenkanals und mindestens zwei, mindestens drei oder sämtliche Laufstreifenkanalabschnitte des zweiten Laufstreifenkanals sich in Extrusionsrichtung parallel zueinander erstrecken
   und/oder
- der eine Mündungsöffnungsabschnitt, die mindestens zwei, mindestens drei oder sämtliche Mündungsöffnungsabschnitte der ersten Mündungsöffnung und der eine Mündungsöffnungsabschnitt, die mindestens zwei, mindestens drei oder sämtliche Mündungsöffnungsabschnitte der zweiten Mündungsöffnung eine Höhe in horizontaler Richtung im Bereich von 1 mm bis 500 mm aufweisen, bevorzugt im Bereich von 2 mm bis 250 mm, besonders bevorzugt im Bereich von 5 mm bis 100 mm.

Ein Vorteil des vorstehend beschriebenen Aspekts der vorliegenden Erfindung ist, dass sich parallel erstreckende Laufstreifenkanalabschnitte einen besonders geringen Fließwiderstand erzeugen und daher beispielsweise mittels eines nachstehend beschriebenen erfindungsgemäßen Verfahrens problemlos extrudiert werden können.

Bevorzugt ist eine erfindungsgemäße Vorrichtung wie vorstehend beschrieben oder wie vorstehend als bevorzugt beschrieben, wobei ein Profilquerschnitt eines oder des einen oder mindestens eines Mündungsöffnungsabschnitts der ersten und/oder zweiten Mündungsöffnung eine trapezförmige Fläche aufweist, wobei die beiden Seitenkanten der trapezförmigen Fläche bevorzugt mit der horizontalen Richtung eine Trapezwinkel im Bereich von 1° bis 10° oder 45° bis 135° bilden und die obere Kante und die untere Kante der trapezförmigen Fläche bevorzugt parallel zur horizontalen Richtung sind.

Bevorzugt ist eine erfindungsgemäße Vorrichtung wie vorstehend beschrieben oder wie vorstehend als bevorzugt beschrieben, wobei
- der eine oder der mindestens eine Mündungsöffnungsabschnitt der ersten Mündungsöffnung
   und/oder
- der eine oder der mindestens ein Mündungsöffnungsabschnitt der zweiten Mündungsöffnung
eine Breite in horizontale Richtung im Bereich von 0,1 mm bis 70 mm aufweist, bevorzugt im Bereich von 0,5 bis 40 mm, besonders bevorzugt im Bereich von 0,5 bis 25 mm, ganz besonders bevorzugt im Bereich von 1 bis 10 mm.

Die einzelne Mündungsöffnungsabschnitte der ersten Mündungsöffnung sind von den einzelnen Mündungsöffnungsabschnitten der zweiten Mündungsöffnung durch eine Mündungstrennwand räumlich getrennt und die Mündungstrennwand weist bevorzugt eine Stärke im Bereich von 0,1 mm bis 10 mm auf, besonders bevorzugt im Bereich von 0,5 bis 3 mm.

Die Mündungstrennwand weist eine wellenartige oder zig-zag-artige Form oder die Form einer Rechteck-Funktion auf, wobei die Wellen, Zacken oder Rechtecke in vertikaler Richtung ausschlagen, d.h. hoch- und runter verlaufen.

Ein Vorteil des vorstehend beschriebenen Aspekts der vorliegenden Erfindung ist, dass die entstehenden Laufstreifen so geformt werden können, dass die steifere Gummikomponente radial außen im Laufstreifen ist und somit beim Abfahren während des Gebrauchs des Laufstreifens die Steifigkeit des Laufstreifens oder der darauf befindlichen Profilblöcke konstant oder konstanter gehalten werden kann.

Bevorzugt ist eine erfindungsgemäße Vorrichtung wie vorstehend beschrieben oder wie vorstehend als bevorzugt beschrieben oder wie vorstehend als besonders bevorzugt beschrieben, wobei mindestens eine oder jede Mündungsöffnung der ersten und zweiten Mündungsöffnung sowie jede Mündungsöffnung weiterer Laufstreifenkanäle einen Austrittsbereich mit einer Höhe in vertikale Richtung und mit einer Breite in horizontaler Richtung bilden und
- die Höhe der Mündungsöffnungsabschnitte der ersten und/oder zweiten Mündungsöffhung im Bereich von 50 % bis 100 % der Höhe des Austrittsbereiches entspricht, bevorzugt im Bereich von 80 % bis 100 %, besonders bevorzugt im Bereich von 90 % bis 100 %, ganz besonders bevorzugt genau 100% der Höhe des Austrittsbereiches, bevorzugt die Höhe des Austrittsbereiches an dem jeweiligen Mündungsöffnungsabschnitt,
   und/oder
- die Breite der Mündungsöffnungsabschnitte der ersten und/oder zweiten Mündungsöffhung im Bereich von 0,1 % bis 35 % der Breite des Austrittsbereiches entspricht, bevorzugt im Bereich von 0,1 % bis 20 %, besonders bevorzugt im Bereich von 0,1 % bis 10 %, ganz besonders bevorzugt im Bereich von 0,1 % bis 5 %, bevorzugt die Breite des Austrittsbereiches an dem jeweiligen Mündungsöffnungsabschnitt.

Ein Vorteil des vorstehend beschriebenen Aspekts der vorliegenden Erfindung ist, dass eine oder mehrere Oberflächen des so extrudierten Laufstreifens nicht eben sind und somit mehr Grip aufweisen können oder in einer weiteren Kautschukmischung, beispielsweise der Base-Komponente des Laufstreifens, fest verbunden werden können.

Im Rahmen der vorliegenden Erfindung umfasst der vorstehend beschriebene Austrittsbereich bevorzugt die Mündungsöffnungsabschnitte der ersten und zweiten Mündungsöffnung sowie sämtlicher weiterer anwesender Mündungsöffnungen.

Bevorzugt ist eine erfindungsgemäße Vorrichtung wie vorstehend beschrieben oder wie vorstehend als bevorzugt beschrieben, zur Verwendung in einem Extruder, bevorzugt zur Verwendung in einem Quattroplex- oder Quintoplex-Extruder.

In besonders hohem Maße bevorzugt ist eine erfindungsgemäße Vorform-Vorrichtung wie vorstehend beschrieben, zur Verwendung in einem Quattro- oder einem Quintoplex-Extruder, umfassend zumindest:
- einen ersten Laufstreifenkanal mit einer ersten Mündungsöffnung, wobei die erste Mündungsöffnung mindestens neun Mündungsöffnungsabschnitte aufweist, und
- einen zweiten Laufstreifenkanal mit einer zweiten Mündungsöffnung, wobei die zweite Mündungsöffnung mindestens neun Mündungsöffnungsabschnitte aufweist, dadurch gekennzeichnet, dass ein horizontaler Querschnitt der Vorform-Vorrichtung in horizontaler Richtung nacheinander angeordnete Mündungsöffnungsabschnitte aufweist, wobei die in horizontaler Richtung nacheinander angeordneten Mündungsöffnungsabschnitte alternierend zur ersten und zur zweiten Mündungsöffnung gehören,
   wobei
- die neun Mündungsöffnungsabschnitte der ersten Mündungsöffnung und die neun Mündungsöffnungsabschnitte der zweiten Mündungsöffnung eine Höhe in horizontale Richtung im Bereich von 2 mm bis 100 mm aufweisen,
- der neun Mündungsöffnungsabschnitt der ersten Mündungsöffnung und die neun Mündungsöffnungsabschnitt der zweiten Mündungsöffnung eine Breite in vertikale Richtung im Bereich von 0,5 bis 3 mm aufweist,
- die erste Mündungsöffnung von der zweiten Mündungsöffnung durch eine Mündungstrennwand räumlich getrennt,
- die Mündungstrennwand eine wellenartige Form aufweist und eine Stärke im Bereich von 0,5 bis 3 mm aufweist,
   und
- Mündungsöffnungen der ersten und zweiten Mündungsöffnung sowie Mündungsöffnungen weiterer Laufstreifenkanäle einen Austrittsbereich mit einer Höhe in vertikale Richtung und mit einer Breite in horizontaler Richtung bilden und
   - die Höhe der Mündungsöffnungsabschnitte der ersten und/oder zweiten Mündungsöffnung genau 100% der Höhe des Austrittsbereiches entspricht,
      und
   - die Breite der Mündungsöffnungsabschnitte der ersten und/oder zweiten Mündungsöffnung im Bereich von 0,1 % bis 10 % entspricht.

Die vorstehend beschriebenen vorteilhaften Aspekte einer erfindungsgemäßen Vorrichtung wie vorstehend beschrieben oder wie vorstehend als bevorzugt beschrieben gelten auch für sämtliche Aspekte eines nachstehend beschriebenen Verfahrens zur Herstellung eines Fahrzeugluftreifens mit einem Laufstreifenabschnitt mit mindestens zwei Gummikomponenten und die nachstehend diskutierten vorteilhaften Aspekte erfindungsgemäßer Verfahren gelten entsprechend für sämtliche Aspekte einer erfindungsgemäßen Vorrichtung zur Verwendung in einem Extruder zum Extrudieren eines Laufstreifenabschnittes mit mindestens zwei in horizontaler Richtung nacheinander angeordneten Gummikomponenten.

Die Erfindung betrifft auch ein Verfahren zur Herstellung eines Fahrzeugluftreifens mit einem Laufstreifenabschnitt mit mindestens zwei Gummikomponenten, umfassen die folgenden Schritte:
A) Herstellen oder Bereitstellen einer ersten Kautschukmischung,
B) Herstellen oder Bereitstellen einer zweiten Kautschukmischung,
C) Extrudieren der ersten Kautschukmischung durch einen ersten Extruderkopf,
D) Extrudieren der zweiten Kautschukmischung durch einen zweiten Extruderkopf,
E) Leiten der ersten Kautschukmischung durch den ersten Laufstreifenkanal einer Vorform-Vorrichtung wie vorstehend beschrieben oder wie vorstehend als bevorzugt beschrieben und Leiten der zweiten Kautschukmischung durch den zweiten Laufstreifenkanal einer Vorform-Vorrichtung wie vorstehend beschrieben oder wie vorstehend als bevorzugt beschrieben, sodass Extrudat, insbesondere ein Laufstreifenabschnitt, mit mindestens zwei in horizontaler Richtung nacheinander angeordneten Gummikomponenten resultiert,
F) Weiterverarbeiten des Extrudats oder Laufstreifens mit mindestens zwei in horizontaler Richtung nacheinander angeordneten Gummikomponenten und weiteren Reifenkomponenten zu einem Fahrzeugluftreifen mit einem Laufstreifen mit mindestens zwei in axialer Richtung nacheinander angeordneten und sich in Umfangsrichtung erstreckende Gummikomponenten,
wobei die besagten nacheinander angeordneten Gummikomponenten dabei bevorzugt parallel zu einander und sind streifenförmig verlaufen.

Bevorzugt ist ein erfindungsgemäßes Verfahren wie vorstehend beschrieben oder wie vorstehend als bevorzugt beschrieben, wobei der Schritt F) ersetzt wird durch die folgenden Schritte G) und H):
G) Schneiden des Extrudats mit mindestens zwei in horizontaler Richtung nacheinander angeordneten Gummikomponenten in einem Schneidewinkel β, sodass gleich lange Extrudatstücke resultieren, und Drehen der gleich langen Extrudatstücke um den Schneidewinkel β und Verbinden der um den Schneidewinkel β gedrehten Extrudatstücke an den ungeschnittenen Seitenkannten der Extrudatstücke, sodass ein Laufstreifenabschnitt mit mindestens zwei, zur Extrusionsrichtung um den Schneidewinkel β gedrehte, nacheinander angeordneten Gummikomponenten resultiert,
   und
H) Weiterverarbeiten des Laufstreifenabschnittes mit mindestens zwei, zur Extrusionsrichtung um den Schneidewinkel β gedrehte, nacheinander angeordneten Gummikomponenten und weiteren Reifenkomponenten zu einem Fahrzeugluftreifen mit einem Laufstreifen mindestens zwei, zur Umfangsrichtung um den Schneidewinkel β gedrehte, nacheinander angeordneten Gummikomponenten.

Der Schneidewinkel β ist hierbei bevorzugt zwischen 30° und 150°. Ist der Schneidewinkel β genau 90°, so ergibt sich im Schritt H) ein Laufstreifen mit mindestens zwei in Umfangsrichtung nacheinander angeordnete und sich in axiale Richtung erstreckende Gummikomponenten. Das Drehen um den Schneidewinkel β wird bevorzugt um eine Rotationsachse vollzogen, welche parallel zur vertikalen Richtung verläuft.

Ein Vorteil des vorstehend beschriebenen Aspekts der vorliegenden Erfindung ist, dass auf diese Weise Laufstreifen mit Streifen aus der ersten und zweiten Gummikomponente hergestellt werden können welche nicht nur parallel zur Umfangsrichtung sind sondern einen beliebigen Winkel zur Umfangsrichtung aufweisen, nämlich den Schneidwinkel β. Solche Reifen haben ebenfalls Vorteile im Schneehandling, wie die für Reifen mit in Umfangsrichtung laufende Streifen im Laufstreifen in den nachstehenden Versuchen gezeigt wurde, und noch weitere vorteilhafte Brems- und Rollwiderstandseigenschaften.

Bevorzugt ist ein erfindungsgemäßes Verfahren wie vorstehend beschrieben oder wie vorstehend als bevorzugt beschrieben, wobei während des Extrudierens im Schritt C) und/oder Schritt D) eine Temperatur im Bereich von 97 °C bis 125 °C in dem ersten und/oder zweiten Extruderkopf vorliegt, bevorzugt im Bereich von 105 °C bis 125 °C, wobei die Kautschukmischung mit der höheren dynamischen Steifigkeit in Anlehnung an DIN 53512 bevorzugt die zweite Kautschukmischung ist.

Ein Vorteil des vorstehend beschriebenen Aspekts der vorliegenden Erfindung ist, dass auf diese Weise auch steifere Kautschukmischungen problemlos extrudiert werden können, insbesondere solche mit den nachstehend definierten Mooney-Viskositäten.

Im Rahmen der vorliegenden Erfindung werden als Maß für die dynamische Steifigkeit im das dynamische Speichermodul bei 55°C und das dynamische Speichermodul bei -15°C herangezogen. Die dynamischen Speichermodule werden als über die Dehnung gemittelte dynamische Speichermodule aus einer dynamisch-mechanischen Messung mit einem Dehnungsdurchlauf (engl. "strain sweep") bei einer Vorkompression von 20% im Dehnungsbereich von 0,15% bis 8% und einer Frequenz von 10 Hz bei einer Temperatur von 55°C bzw. -15°C in Anlehnung an DIN 53512 bestimmt.

Bevorzugt ist ein erfindungsgemäßes Verfahren wie vorstehend beschrieben oder wie vorstehend als bevorzugt beschrieben, wobei die erste Kautschukmischung eine erste Kautschukzusammensetzung aufweist und die zweite Kautschukmischung eine zweite Kautschukzusammensetzung aufweist, wobei die zweite Kautschukmischung andere dynamische Steifigkeitseigenschaften als die erste Kautschukmischung aufweist, insbesondere andere Werte des dynamischen Speichermoduls E` bei -15°C und/oder bei 55 °C in Anlehnung an DIN 53 513 als die erste Gummikomponente. Unter dem Ausdruck "andere Werte des dynamischen Speichermoduls E` " sind solche Werte zu verstehen, die um maximal 2 MPa, bevorzugt um maximal 1 MPa, voneinander abweichen. Ein erfindungsgemäßer Fahrzeugluftreifen aufweisend einen solchen Laufstreifen ist somit bezüglich des Zielkonflikts zwischen Rollwiderstand und Schneehandling oder zwischen Schneehandling und Trockenhandling verbessert, wodurch er sich insbesondere hervorragend für den Einsatz unter winterlichen Fahrbedingungen eignet. Dies ist auch durch die nachstehenden experimentellen Beispiele belegt. Besonders bevorzugt ist es im Rahmen der vorliegenden Erfindung, wenn das dynamische Speichermodul E` bei -15°C und bei 55 °C gemäß DIN 53 513 bestimmt wird.

Bevorzugt ist ein erfindungsgemäßes Verfahren wie vorstehend beschrieben oder wie vorstehend als bevorzugt beschrieben, wobei während des Extrudierens im Schritt C) und/oder Schritt D) ein Druck im Bereich von 100 bar bis 200 bar in dem ersten und/oder zweiten Extruderkopf vorliegt, bevorzugt im Bereich von 120 bar bis 170 bar, wobei die Kautschukmischung mit der höheren dynamischen Steifigkeit in Anlehnung an DIN 53512 bevorzugt die zweite Kautschukmischung ist.

Ein Vorteil des vorstehend beschriebenen Aspekts der vorliegenden Erfindung ist, dass auf diese Weise auch steifere Kautschukmischungen problemlos extrudiert werden können, insbesondere solche mit den nachstehend definierten Mooney-Viskositäten.

Bevorzugt ist ein erfindungsgemäßes Verfahren wie vorstehend beschrieben oder wie vorstehend als bevorzugt beschrieben, wobei
- das Verhältnis von dem dynamischen Speichermodul bei - 15° C in Anlehnung an DIN 53 513 der ersten Kautschukmischung zum dynamischen Speichermodul bei - 15° C in Anlehnung an DIN 53 513 der zweiten Kautschukmischung im Bereich von 0,025 bis 0,995 liegt, bevorzugt im Bereich von 0,3 bis 0,8, besonders bevorzugt im Bereich von 0,4 bis 0,7,
   und/oder
- das Verhältnis von dem dynamischen Speichermodul bei 55° C in Anlehnung an DIN 53 513 der zweiten Kautschukmischung zum dynamischen Speichermodul bei 55° C in Anlehnung an DIN 53 513 der ersten Kautschukmischung im Bereich von 1,01 bis 1,90 liegt, bevorzugt im Bereich von 1,2 bis 1,7, besonders bevorzugt im Bereich von 1,3 bis 1,6.

Besonders bevorzugt ist im Rahmen der Erfindung, wenn die zweite Kautschukmischung ein dynamisches Speichermodul bei 55° C von maximal 15,0 MPa aufweist und wenn die erste Kautschukmischung ein dynamisches Speichermodul bei 55° C von mindestens 3,5 MPa aufweist. Das dynamische Speichermodul bei - 15° C der ersten Kautschukmischung sollte maximal 170 MPa betragen.

Ganz besonders bevorzugt ist ein erfindungsgemäßes Verfahren wie vorstehend beschrieben oder wie vorstehend als bevorzugt oder als besonders bevorzugt beschrieben, wobei die zweite Kautschukmischung
- ein dynamisches Speichermodul E` bei 55 °C in Anlehnung an DIN 53 513 im Bereich von 1 bis 15 MPa aufweist, bevorzugt im Bereich von 3,5 bis 13 MPa, besonders bevorzugt im Bereich von 6 bis 10 MPa,
   und/oder
- ein dynamisches Speichermodul E` bei -15 °C in Anlehnung an DIN 53 513 im Bereich von 1 bis 350 MPa aufweist, bevorzugt im Bereich von 10 bis 250 MPa, besonders bevorzugt im Bereich von 50 bis 170 MPa.

Auch ganz besonders bevorzugt ist ein erfindungsgemäßes Verfahren wie vorstehend beschrieben oder wie vorstehend als bevorzugt oder als besonders bevorzugt oder als ganz besonders bevorzugt beschrieben, wobei die erste Kautschukmischung
- ein dynamisches Speichermodul E` bei 55 °C in Anlehnung an DIN 53 513 im Bereich von 1 bis 15 MPa aufweist, bevorzugt im Bereich von 4 bis 13 MPa, besonders bevorzugt im Bereich von 6 bis 10 MPa,
   und/oder
- ein dynamisches Speichermodul E` bei -15 °C in Anlehnung an DIN 53 513 im Bereich von 1 bis 170 MPa aufweist, bevorzugt im Bereich von 10 bis 120 MPa, besonders bevorzugt im Bereich von 30 bis 80 MPa.

Ein Vorteil des vorstehend beschriebenen Aspekts der vorliegenden Erfindung ist, dass durch die unabhängige Einstellung der dynamischen Steifigkeit der ersten Kautschukmischung und der zweiten Kautschukmischung dazu führen, dass das Fahrverhalten, insbesondere die Bremseigenschaften sowie das Kurvenfahrverhalten, auf schneebedeckten und auf trockener Fahrbahn oder der Rollwiderstand zusammen mit dem Schneehandling verbessert werden kann.

Bevorzugt ist ein erfindungsgemäßes Verfahren wie vorstehend beschrieben oder wie vorstehend als bevorzugt beschrieben, wobei das Weiterverarbeiten in Schritt F) eine Vulkanisation des Laufstreifens und der weiteren Reifenkomponenten zwischen 120° und 200 °C umfasst.

Bevorzugt ist ein erfindungsgemäßes Verfahren wie vorstehend beschrieben oder wie vorstehend als bevorzugt beschrieben, wobei während des Extrudierens im Schritt C) und/oder Schritt D) eine Kautschukmischung als zweite Kautschukmischung oder zwei Kautschukmischungen als erste und zweite Kautschukmischung verwendet werden, wobei die eine oder die zwei Kautschukmischungen eine Mooney-Viskosität (ML 1+3) bei 20 °C im Bereich von 30 MU bis 100 MU aufweisen, bevorzugt im Bereich von 45 MU bis 90 MU, besonders bevorzugt im Bereich von 55 MU bis 85 MU.

Ein Vorteil des vorstehend beschriebenen Aspekts der vorliegenden Erfindung ist, dass auf diese Weise auch die Kautschukmischungen mit den vorstehend beschriebenen Mooney-Viskosität besser mit einer erfindungsgemäßen Vorrichtung extrudiert werden können als bei im Stand der Technik bekannten Verfahren.

In besonders hohem Maße bevorzugt ist ein erfindungsgemäßes Verfahren wie vorstehend beschrieben, umfassen die folgenden Schritte:
A) Herstellen oder Bereitstellen einer ersten Kautschukmischung,
B) Herstellen oder Bereitstellen einer zweiten Kautschukmischung, wobei die zweite Kautschukmischung eine von der ersten Kautschukmischung unterschiedliche Kautschukzusammensetzung aufweist,
C) Extrudieren der ersten Kautschukmischung durch einen ersten Extruderkopf,
D) Extrudieren der zweiten Kautschukmischung durch einen zweiten Extruderkopf,
E) Leiten der ersten und zweiten Kautschukmischung durch den ersten und zweiten Laufstreifenkanal einer Vorform-Vorrichtung wie vorstehend beschrieben, sodass ein Laufstreifenabschnitt mit mindestens zwei in horizontaler Richtung nacheinander angeordneten Gummikomponenten resultiert,
F) Weiterverarbeiten des Laufstreifens mit mindestens zwei in horizontaler Richtung nacheinander angeordneten Gummikomponenten und weiteren Reifenkomponenten zu einem Fahrzeugluftreifen mit einem Laufstreifen mit mindestens zwei in axialer Richtung nacheinander angeordneten Gummikomponenten, wobei das Weiterverarbeiten eine Vulkanisation des Laufstreifens und der weiteren Reifenkomponenten zwischen 120° und 200 °C umfasst,
wobei während des Extrudierens im Schritt C) und Schritt D)
- eine Temperatur im Bereich von 97 °C bis 125 °C in dem ersten und zweiten Extruderkopf vorliegt,
- ein Druck im Bereich von 120 bar bis 170 bar in dem ersten und zweiten Extruderkopf vorliegt
   und
- zwei Kautschukmischungen als erste und zweite Kautschukmischung verwendet werden, wobei die zwei Kautschukmischungen eine Mooney-Viskosität (ML 1+3) bei 20 °C im Bereich von 45 MU bis 90 MU aufweisen.

Die vorstehend beschriebenen vorteilhaften Aspekte einer erfindungsgemäßen Vorrichtung wie vorstehend beschrieben oder wie vorstehend als bevorzugt beschrieben und eines erfindungsgemäßen Verfahrens zur Herstellung eines Fahrzeugluftreifens mit einem Laufstreifenabschnitt mit mindestens zwei Gummikomponenten gelten auch für sämtliche Aspekte nachstehend beschriebener Fahrzeugluftreifen und die nachstehend diskutierten vorteilhaften Aspekte erfindungsgemäßer Fahrzeugluftreifen gelten entsprechend für sämtliche Aspekte einer erfindungsgemäßen Vorrichtung wie vorstehend beschrieben oder wie vorstehend als bevorzugt beschrieben und eines erfindungsgemäßen Verfahrens zur Herstellung eines Fahrzeugluftreifens mit einem Laufstreifenabschnitt mit mindestens zwei Gummikomponenten.

Die Erfindung betrifft auch einen Fahrzeugreifen
- hergestellt oder herstellbar nach einem Verfahren wie vorstehend beschrieben oder wie vorstehend als bevorzugt beschrieben
   und/oder
- umfassend einen Laufstreifenabschnitt mit einem Axialquerschnitt, wobei der Axialquerschnitt des Laufstreifens mindestens zwei in Umfangsrichtung nacheinander angeordnete Gummikomponenten aufweist, wobei die nacheinander angeordneten Gummikomponenten des Laufstreifens alternierend aus mindestens einer ersten und einer zweiten Kautschukzusammensetzung bestehen, wobei die erste Kautschukzusammensetzung sich bevorzugt von der zweiten Kautschukzusammensetzung unterscheidet

Bevorzugt ist ein erfindungsgemäßer Fahrzeugreifen wie vorstehend beschrieben oder wie vorstehend als bevorzugt beschrieben, wobei mindestens eine erste Gummikomponente und mindestens eine zweite Gummikomponente als nacheinander angeordneten Gummikomponenten ringförmig sind und achsensymmetrisch um die Achse des Fahrzeugreifens verlaufen, bevorzugt sind sämtliche erste und zweiten Gummikomponenten ringförmig und verlaufen achsensymmetrisch um die Achse des Fahrzeugreifens.

Bevorzugt ist ein erfindungsgemäßer Fahrzeugreifen wie vorstehend beschrieben oder wie vorstehend als bevorzugt beschrieben, wobei die erste Gummikomponente aus einer erste Kautschukzusammensetzung besteht und die zweite Gummikomponente aus einer sich von der ersten Kautschukzusammensetzung unterscheidende zweite Kautschukzusammensetzung besteht.

Bevorzugt ist ein erfindungsgemäßer Fahrzeugreifen wie vorstehend beschrieben oder wie vorstehend als bevorzugt beschrieben, wobei der Fahrzeugreifen ein Fahrzeugluftreifen ist bevorzugt ein Fahrzeugluftreifen für einen Personenkraftwagen, einen Van, ein Nutzfahrzeug, ein Industriefahrzeug oder ein Motorrad, besonders bevorzugt ist der Fahrzeugreifen ein zugelassener Winter-Fahrzeugluftreifen oder ein Fahrzeugluftreifen zum zugelassenen Einsatz unter winterlichen Fahrbedingungen.

Bevorzugt ist ein erfindungsgemäßer Fahrzeugreifen wie vorstehend beschrieben oder wie vorstehend als bevorzugt beschrieben, wobei mindestens drei in axialer Richtung nacheinander angeordnete Gummikomponenten, mindestens vier in axialer Richtung nacheinander angeordnete Gummikomponenten, mindestens fünf oder mindestens sechs in axialer Richtung nacheinander angeordnete Gummikomponenten im Laufstreifen vorliegen. Hierbei bestehen die in axialer Richtung nacheinander angeordneten Gummikomponenten des Laufstreifens bevorzugt alternierend aus einer ersten und einer zweiten Kautschukzusammensetzung bestehen und besonders bevorzugt unterscheidet sich die erste Kautschukzusammensetzung von der zweiten Kautschukzusammensetzung, wobei entsprechendes für eine dritte, vierte, fünfte und jede weitere Kautschukzusammensetzung gilt.

Die vorstehend beschriebenen vorteilhaften Aspekte einer erfindungsgemäßen Vorrichtung wie vorstehend beschrieben oder wie vorstehend als bevorzugt beschrieben und eines erfindungsgemäßen Verfahrens zur Herstellung eines Fahrzeugluftreifens mit einem Laufstreifenabschnitt mit mindestens zwei Gummikomponenten sowie eines erfindungsgemäßen Fahrzeugluftreifens gelten auch für sämtliche Aspekte nachstehend beschriebener Verwendungen und die nachstehend diskutierten vorteilhaften Aspekte erfindungsgemäßer Verwendungen gelten entsprechend für sämtliche Aspekte einer erfindungsgemäßen Vorrichtung wie vorstehend beschrieben oder wie vorstehend als bevorzugt beschrieben und eines erfindungsgemäßen Verfahrens zur Herstellung eines Fahrzeugluftreifens mit einem Laufstreifenabschnitt mit mindestens zwei Gummikomponenten sowie eines erfindungsgemäßen Fahrzeugluftreifens.

Die Erfindung betrifft auch eine Verwendung einer Mündungstrennwand wie vorstehend beschrieben oder wie vorstehend als bevorzugt beschrieben in einer Vorform-Vorrichtung zur Verwendung in einem Extruder.

Die Erfindung betrifft auch eine Verwendung einer Vorform-Vorrichtung wie vorstehend beschrieben oder wie vorstehend als bevorzugt beschrieben
- zur Herstellung eines Fahrzeugluftreifens wie vorstehend beschrieben oder wie vorstehend als bevorzugt beschrieben
   oder
- zur Herstellung eines Laufstreifenabschnittes mit einem Axialquerschnitt, wobei der Axialquerschnitt des Laufstreifens mindestens zwei in Umfangsrichtung nacheinander angeordnete Gummikomponenten aufweist, wobei die nacheinander angeordneten Gummikomponenten des Laufstreifens alternierend aus mindestens einer ersten und einer zweiten Kautschukzusammensetzung bestehen, wobei die erste Kautschukzusammensetzung sich bevorzugt von der zweiten Kautschukzusammensetzung unterscheidet.

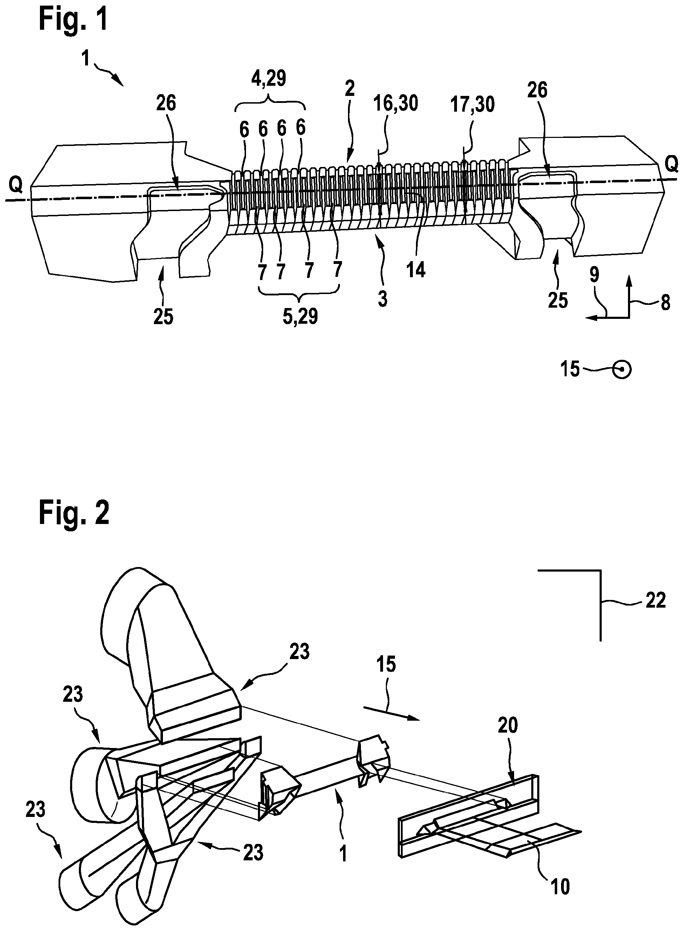

Weitere Vorteile der vorliegenden Erfindung werden im Folgenden in Form von Aspekten beschrieben, wobei sich die Zahlen in der Klammer auf die Bezugszeichen in den angehängten Figuren 1 bis 6 beziehen:
1. Aspekt:
   Vorform-Vorrichtung (1) zur Verwendung in einer Extrusionsvorrichtung (22), umfassend zumindest
   - einen ersten Laufstreifenkanal (2) mit einer ersten Mündungsöffnung (4), wobei die erste Mündungsöffnung (4) einen, zwei, drei, vier, fünf, sechs, sieben, acht, neun oder mehr als neun einzelne Mündungsöffnungsabschnitte (6) aufweist,
      und
   - einen zweiten Laufstreifenkanal (3) mit einer zweiten Mündungsöffnung (5), wobei die zweite Mündungsöffnung (5) einen, zwei, drei, vier, fünf, sechs, sieben, acht, neun oder mehr als neun einzelne Mündungsöffnungsabschnitte (7) aufweist,
   dadurch gekennzeichnet, dass
   die Mündungsöffnungsabschnitte (6) der ersten Mündungsöffnung (4) und die Mündungsöffnungsabschnitte (7) der zweiten Mündungsöffnung (5) an der zum Kontakt mit einer Endform-Vorrichtung (20) vorgesehene Seite der Vorform-Vorrichtung (1) so angeordnet sind, dass ein Extrudat (10), bevorzugt ein Laufstreifenabschnitt, mit einem Profilquerschnitt mit mindestens zwei, mindestens drei oder mindestens vier in horizontaler Richtung nacheinander angeordneten Gummikomponenten (11) in Form von sich in Extrusionsrichtung (15) erstreckenden Streifen (24a, 24b) hergestellt werden kann.
2. Vorform-Vorrichtung nach Aspekt 1, umfassend zumindest
   - einen ersten Laufstreifenkanal (2) mit einer ersten Mündungsöffnung (4), wobei die erste Mündungsöffnung (4) einen, zwei, drei, vier, fünf, sechs, sieben, acht, neun oder mehr als neun Mündungsöffnungsabschnitte (6) aufweist,
      und
   - einen zweiten Laufstreifenkanal (3) mit einer zweiten Mündungsöffnung (5), wobei die zweite Mündungsöffnung (5) einen, zwei, drei, vier, fünf, sechs, sieben, acht, neun oder mehr als neun Mündungsöffnungsabschnitte (7) aufweist,
   wobei ein horizontaler Querschnitt der Vorform-Vorrichtung (1)
   - in horizontaler Richtung (9) nacheinander angeordnete Laufstreifenkanalabschnitte aufweist, wobei die in horizontaler Richtung (9) nacheinander angeordneten Laufstreifenkanalabschnitte alternierend zum ersten und zum zweiten Laufstreifenkanal (2, 3) gehören,
      und/oder
   - in horizontaler Richtung (9) nacheinander angeordnete
      Mündungsöffnungsabschnitte (6, 7) aufweist, wobei die in horizontaler Richtung (9) nacheinander angeordneten Mündungsöffnungsabschnitte (6, 7) alternierend zur ersten und zur zweiten Mündungsöffnung (4, 5) gehören.
3. Vorform-Vorrichtung nach einem der vorangehenden Aspekte, umfassend zumindest:
   - einen ersten Laufstreifenkanal (2) mit einer ersten Mündungsöffnung (4), wobei die erste Mündungsöffnung (4) einen, zwei, drei, vier, fünf, sechs, sieben, acht, neun oder mehr als neun Mündungsöffnungsabschnitte (6) aufweist,
      und
   - einen zweiten Laufstreifenkanal (3) mit einer zweiten Mündungsöffnung (5), wobei die zweite Mündungsöffnung (5) einen, zwei, drei, vier, fünf, sechs, sieben, acht, neun oder mehr als neun Mündungsöffnungsabschnitte (7) aufweist,
   wobei mindestens ein Mündungsöffnungsabschnitt (6) der ersten Mündungsöffnung (4) von mindestens zwei Mündungsöffnungsabschnitten (7) der zweiten Mündungsöffnung (5) begrenzt wird und/oder mindestens ein Mündungsöffnungsabschnitt (7) der zweiten Mündungsöffnung (5) von mindestens zwei Mündungsöffnungsabschnitten (6) der ersten Mündungsöffnung (4) begrenzt wird.
4. Vorform-Vorrichtung nach einem der vorangehenden Aspekte, wobei
   - mindestens zwei, mindestens drei oder sämtliche Laufstreifenkanalabschnitte des ersten Laufstreifenkanals (2) und mindestens zwei, mindestens drei oder sämtliche Laufstreifenkanalabschnitte des zweiten Laufstreifenkanals (3) sich in Extrusionsrichtung (15) parallel zueinander erstrecken
      und/oder
   - der eine Mündungsöffnungsabschnitt (6), die mindestens zwei, mindestens drei oder sämtliche Mündungsöffnungsabschnitte (6) der ersten Mündungsöffnung (4) und der eine Mündungsöffnungsabschnitt (7), die mindestens zwei, mindestens drei oder sämtliche Mündungsöffnungsabschnitte (7) der zweiten Mündungsöffhung (5) eine Höhe (16, 17) in horizontaler Richtung (9) im Bereich von 1 mm bis 500 mm aufweisen, bevorzugt im Bereich von 2 mm bis 250 mm, besonders bevorzugt im Bereich von 5 mm bis 100 mm.
5. Vorform-Vorrichtung nach einem der vorangehenden Aspekte, wobei ein Querschnitt eines oder des einen oder mindestens eines Mündungsöffnungsabschnitts (6, 7) der ersten und/oder zweiten Mündungsöffnung (4, 5) eine trapezförmige Fläche aufweist, wobei die beiden Seitenkanten der trapezförmigen Fläche bevorzugt mit der horizontalen Richtung (9) eine Trapezwinkel im Bereich von1° bis 10° oder 45° bis 135° bilden und die obere Kante und die untere Kante der trapezförmigen Fläche bevorzugt parallel zur horizontalen Richtung (9) sind.
6. Vorform-Vorrichtung nach einem der vorangehenden Aspekte, wobei
   - der eine oder der mindestens eine Mündungsöffnungsabschnitt (6) der ersten Mündungsöffnung (4)
      und/oder
   - der eine oder der mindestens ein Mündungsöffnungsabschnitt (7) der zweiten Mündungsöffnung (5)
   eine Breite (18, 19) in horizontale Richtung (9) im Bereich von 0,1 mm bis 70 mm aufweist, bevorzugt im Bereich von 0,5 bis 40 mm, besonders bevorzugt im Bereich von 0,5 bis 25 mm, ganz besonders bevorzugt im Bereich von 1 bis 10 mm.
7. Vorform-Vorrichtung nach einem der vorangehenden Aspekte, wobei die einzelne Mündungsöffnungsabschnitte (6) der ersten Mündungsöffnung (4) von den einzelnen Mündungsöffnungsabschnitten (7) der zweiten Mündungsöffnung (5) durch eine Mündungstrennwand (14) räumlich getrennt sind und die Mündungstrennwand (14) bevorzugt eine Stärke (21) im Bereich von 0,1 mm bis 10 mm aufweist, besonders bevorzugt im Bereich von 0,5 bis 3 mm.
8. Vorform-Vorrichtung nach Aspekt 7, wobei die Mündungstrennwand (14) eine wellenartige oder zig-zag-artige Form oder die Form einer Rechteck-Funktion aufweist.
9. Vorform-Vorrichtung nach einem der vorangehenden Aspekte, wobei mindestens eine oder jede Mündungsöffnung (6, 7) der ersten und zweiten Mündungsöffnung (4, 5) sowie bevorzugt jede Mündungsöffnung (26) weiterer Laufstreifenkanäle (27) einen Austrittsbereich (29) mit einer Höhe (30) in vertikale Richtung (8) und mit einer Breite (31) in horizontaler Richtung (9) bilden und
   - die Höhe (16, 17) der Mündungsöffnungsabschnitte (6, 7) der ersten und/oder zweiten Mündungsöffnung (4, 5) im Bereich von 50 % bis 100 % der Höhe (30) des Austrittsbereiches (29) entspricht, bevorzugt im Bereich von 80 % bis 100 %, besonders bevorzugt im Bereich von 90 % bis 100 %, ganz besonders bevorzugt genau 100% der Höhe (30) des Austrittsbereiches (29),
      und/oder
   - die Breite (18, 19) der Mündungsöffhungsabschnitte (6, 7) der ersten und/oder zweiten Mündungsöffnung (4, 5) im Bereich von 0,1 % bis 35 % der Breite (31) des Austrittsbereiches (29) entspricht, bevorzugt im Bereich von 0,1 % bis 20 %, besonders bevorzugt im Bereich von 0,1 % bis 10 %, ganz besonders bevorzugt im Bereich von 0,1 % bis 5 %.
10. Verwendung einer Vorform-Vorrichtung (1) nach einem der Aspekte 1 bis 9 zur Herstellung eines Laufstreifenabschnittes mit mindestens zwei in horizontaler Richtung (9) nacheinander angeordneten Gummikomponenten (11) oder zur Herstellung eines Laufstreifenabschnittes mit einem Profilquerschnitt mit mindestens zwei, mindestens drei oder mindestens vier in horizontaler Richtung nacheinander angeordneten Gummikomponenten (11) in Form von sich in Extrusionsrichtung (15) erstreckenden Streifen (24a, 24b) hergestellt werden kann.
11. Verfahren zur Herstellung eines Fahrzeugluftreifens mit einem Laufstreifenabschnitt mit mindestens zwei Gummikomponenten, umfassen die folgenden Schritte:
   A) Herstellen oder Bereitstellen einer ersten Kautschukmischung (12),
   B) Herstellen oder Bereitstellen einer zweiten Kautschukmischung (13),
   C) Extrudieren der ersten Kautschukmischung (12) durch einen ersten Extruderkopf (23),
   D) Extrudieren der zweiten Kautschukmischung (13) durch einen zweiten Extruderkopf (23),
   E) Leiten der ersten Kautschukmischung (12) durch den ersten Laufstreifenkanal (2) einer Vorform-Vorrichtung nach den Ansprüchen 1 bis 9 und Leiten der zweiten Kautschukmischung (13) durch den zweiten Laufstreifenkanal (3) einer Vorform-Vorrichtung nach den Ansprüchen 1 bis 9, sodass ein Extrudat (10) mit mindestens zwei, mindestens drei oder mindestens vier in horizontaler Richtung (9) nacheinander angeordneten Gummikomponenten (11) in Form von sich in Extrusionsrichtung (15) erstreckenden Streifen resultiert,
   F) Weiterverarbeiten des daraus resultierenden Laufstreifens oder des Extrudats (10) mit mindestens zwei in horizontaler Richtung (9) nacheinander angeordneten Gummikomponenten (11) und weiteren Reifenkomponenten zu einem Fahrzeugluftreifen mit einem Laufstreifen mit mindestens zwei in axialer Richtung (35) nacheinander angeordneten und sich in Umfangsrichtung erstreckende Gummikomponenten.
12. Verfahren nach Aspekt 11, wobei der Schritt F) ersetzt wird durch die folgenden Schritte G) und H):
   G) Schneiden des Extrudats (10) mit mindestens zwei in horizontaler Richtung (9) nacheinander angeordneten Gummikomponenten (11) in einem Schneidewinkel β, sodass gleich lange Extrudatstücke resultieren, und Drehen der gleich langen Extrudatstücke um den Schneidewinkel β und Verbinden der um den Schneidewinkel β gedrehten Extrudatstücke an den ungeschnittenen Seitenkannten der Extrudatstücke, sodass ein Laufstreifenabschnitt mit mindestens zwei, zur Extrusionsrichtung (15) um den Schneidewinkel β gedrehte, nacheinander angeordneten Gummikomponenten resultiert, und
   H) Weiterverarbeiten des Laufstreifenabschnittes mit mindestens zwei, zur Extrusionsrichtung (15) um den Schneidewinkel β gedrehte, nacheinander angeordneten Gummikomponenten und weiteren Reifenkomponenten zu einem Fahrzeugluftreifen mit einem Laufstreifen mindestens zwei, zur Umfangsrichtung (15) um den Schneidewinkel β gedrehte, nacheinander angeordneten Gummikomponenten.
13. Verfahren nach Aspekt 11 oder Aspekt 12, wobei während des Extrudierens im Schritt C) und/oder Schritt D)
   - eine Temperatur im Bereich von 97 °C bis 125 °C in dem ersten und/oder zweiten Extruderkopf (23) vorliegt, bevorzugt im Bereich von 105 °C bis 125 °C,
      und/oder
   - ein Druck im Bereich von 100 bar bis 200 bar in dem ersten und/oder zweiten Extruderkopf (23) vorliegt, bevorzugt im Bereich von 120 bar bis 170 bar,
      und/oder
   - eine Kautschukmischung als erste oder zweite Kautschukmischung (12, 13) oder zwei Kautschukmischungen als erste und zweite Kautschukmischung (12, 13) verwendet werden, wobei die eine oder die zwei Kautschukmischungen (12, 13) eine Mooney-Viskosität (ML 1+3) bei 20 °C im Bereich von 30 MU bis 100 MU aufweisen, bevorzugt im Bereich von 45 MU bis 90 MU, besonders bevorzugt im Bereich von 55 MU bis 85 MU.
14. Fahrzeugluftreifen
   - hergestellt oder herstellbar nach einem Verfahren nach einem der Aspekte 11 bis 13 und/oder
   - umfassend einen Laufstreifenabschnitt mit einem Axialquerschnitt, wobei der Axialquerschnitt des Laufstreifens mindestens zwei in Umfangsrichtung nacheinander angeordnete Gummikomponenten (11) aufweist, wobei die nacheinander angeordneten Gummikomponenten (11) des Laufstreifens alternierend aus mindestens einer ersten und einer zweiten Kautschukzusammensetzung (12, 13) bestehen, wobei die erste Kautschukzusammensetzung (13) sich bevorzugt von der zweiten Kautschukzusammensetzung (13) unterscheidet.
15. Verwendung einer Vorform-Vorrichtung nach einem der Aspekte 1 bis 9 zur Herstellung eines Fahrzeugluftreifens nach Aspekt 14 oder zur Herstellung eines Laufstreifenabschnittes mit einem Axialquerschnitt, wobei der Axialquerschnitt des Laufstreifens mindestens zwei in Umfangsrichtung nacheinander angeordnete Gummikomponenten (11) aufweist, wobei die nacheinander angeordneten Gummikomponenten (11) des Laufstreifens alternierend aus mindestens einer ersten und einer zweiten Kautschukzusammensetzung (12, 13) bestehen, wobei die erste Kautschukzusammensetzung (13) sich bevorzugt von der zweiten Kautschukzusammensetzung (13) unterscheidet.

### Figurenbeschreibung:

Es zeigt:
- Figur 1:: Ansicht auf die schematisch dargestellte, zum Kontakt mit einer Endform-Vorrichtung vorgesehene Hinterseite einer erfindungsgemäßen Vorform-Vorrichtung, welche die Mündungsabschnitte des ersten Laufstreifenkanals des und die Mündungsabschnitte des zweiten Laufstreifenkanals sowie die Mündungsöffnungen der Wing-Komponentenkanäle aufweist;
- Figur 2:: Ansicht auf eine schematisch dargestellte Zusammensetzung der Einzelteile eines Quattroplex-Extruders;

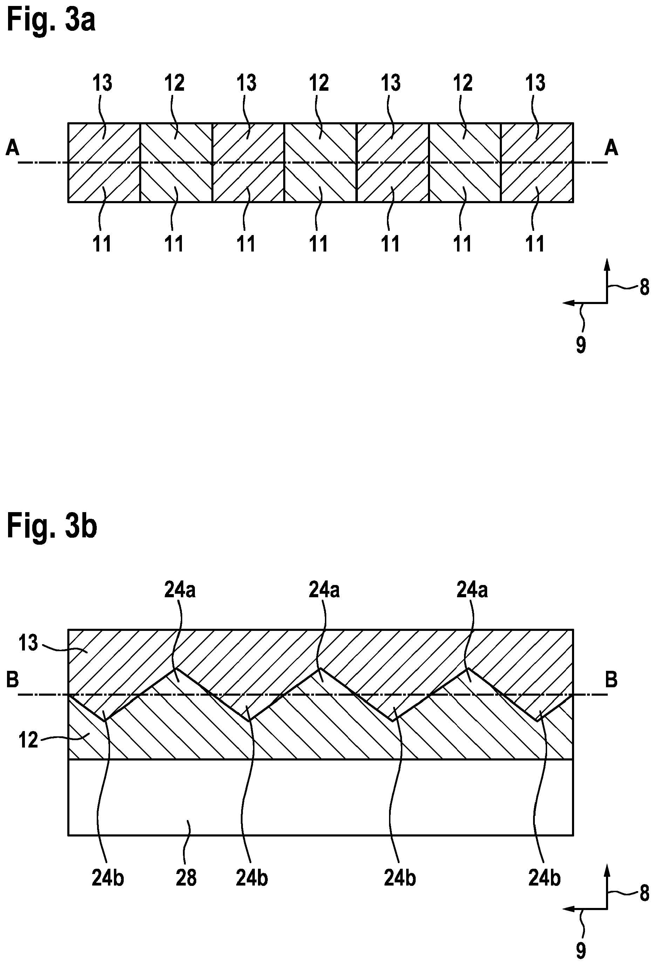

- Figure 3a:: Vertikaler Querschnitt eines schematisch dargestellten Laufstreifenabschnittes eines erfindungsgemäßen Fahrzeugluftreifens in einer ersten Ausführungsform, welche mit einer erfindungsgemäßen Vorform-Vorrichtung mit einer Trennwand in Form einer Rechteck-Funktion hergestellt werden kann, wobei jeder Mündungsöffnungsabschnitt der ersten Mündungsöffnung von mindestens zwei Mündungsöffnungsabschnitten der zweiten Mündungsöffnung und jeder Mündungsöffnungsabschnitt der zweiten Mündungsöffnung von mindestens zwei Mündungsöffnungsabschnitten der ersten Mündungsöffnung begrenzt wird;
- Figure 3b:: Vertikaler Querschnitt eines schematisch dargestellten Laufstreifenabschnittes eines erfindungsgemäßen Fahrzeugluftreifens in einer weiteren Ausführungsform, welche mit einer erfindungsgemäßen Vorform-Vorrichtung mit einer Trennwand mit einer zig-zag-artigen Form hergestellt werden kann;

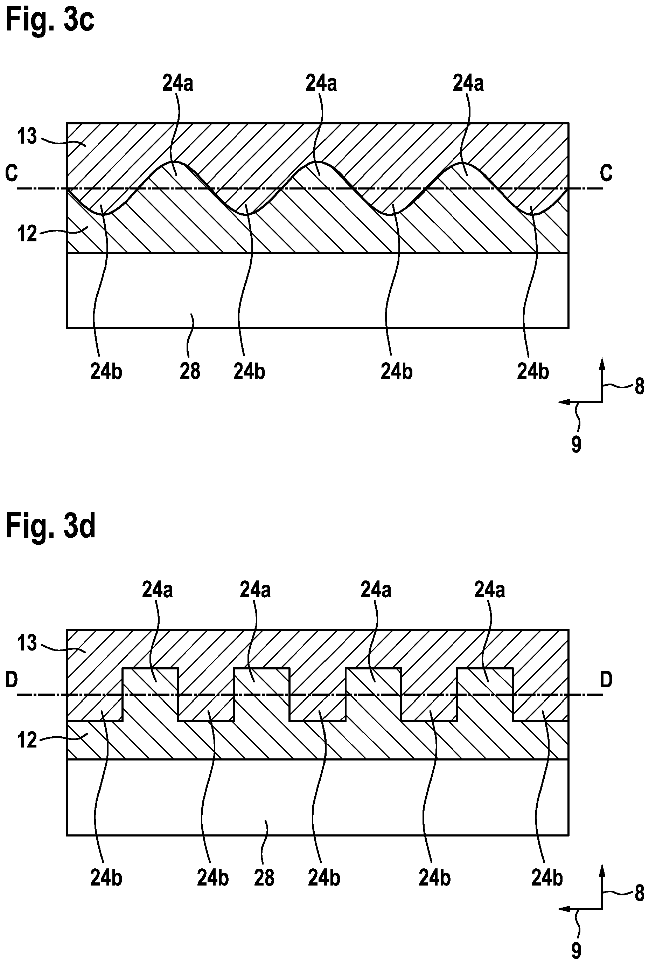

- Figure 3c:: Vertikaler Querschnitt eines schematisch dargestellten Laufstreifenabschnittes eines erfindungsgemäßen Fahrzeugluftreifens in einer weiteren Ausführungsform, welche mit einer erfindungsgemäßen Vorform-Vorrichtung mit einer Trennwand mit einer wellenartigen Form hergestellt werden kann;
- Figure 3d:: Vertikaler Querschnitt eines schematisch dargestellten Laufstreifenabschnittes eines erfindungsgemäßen Fahrzeugluftreifens in einer weiteren Ausführungsform, welche mit einer erfindungsgemäßen Vorform-Vorrichtung mit einer Trennwand in Form einer Rechteck-Funktion hergestellt werden kann;

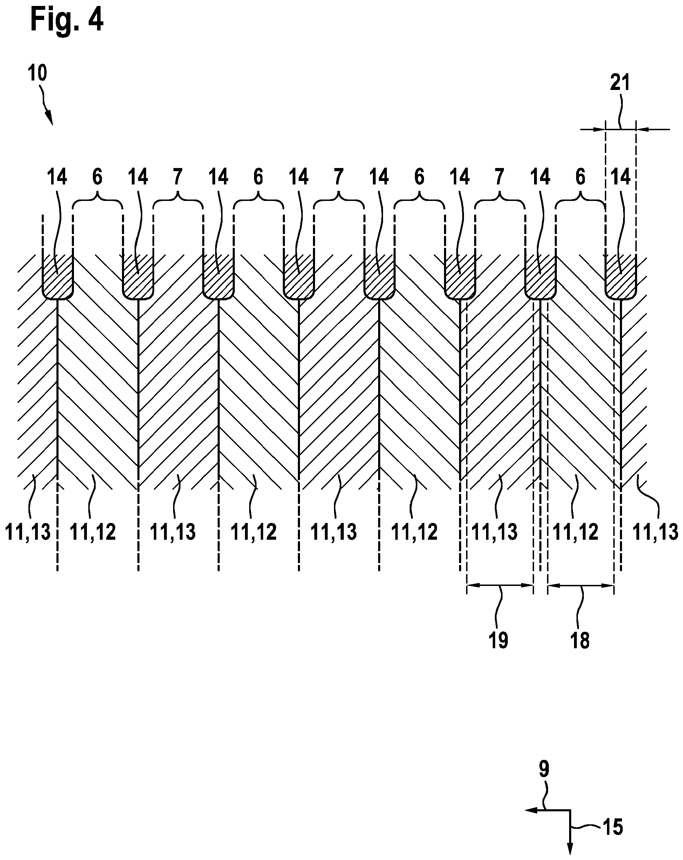

- Figur 4:: Querschnitt einer schematisch dargestellten erfindungsgemäßen Vorform-Vorrichtung während der Verwendung in einem Extruder zur Herstellung eines Laufstreifenabschnittes mit neun in horizontaler Richtung nacheinander angeordneten Gummikomponenten, wobei die Querschnittsebene entlang der Ebene Q-Q wie in Figur 1 dargestellt verläuft und die in horizontaler Richtung nacheinander angeordneten Gummikomponenten des Querschnitts des Laufstreifens des erfindungsgemäßen Fahrzeugluftreifens alternierend aus einer ersten und einer zweiten Kautschukzusammensetzung bestehen;

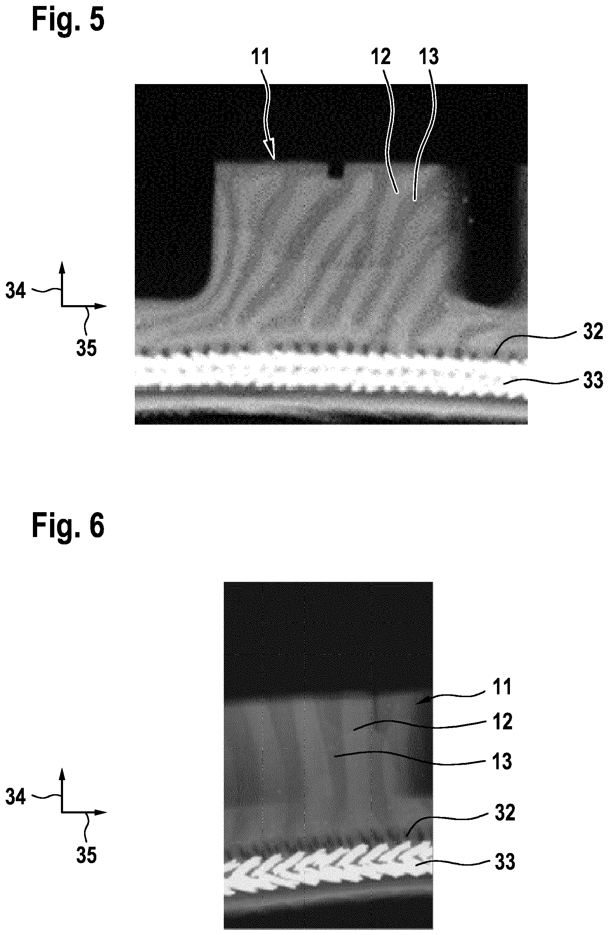

- Figur 5:: Röntgenaufnahme eines Axialquerschnitts eines Laufstreifens eines erfindungsgemäßen Fahrzeugreifens mit helixförmigen, d.h. nicht ringförmigen, ersten und zweiten Gummikomponenten, wobei der gezeigte Fahrzeugluftreifen mit dem vorstehend beschriebenen und im Stand der Technik bekannten Strip-Winding-Verfahren hergestellt wurde;
- Figur 6:: Röntgenaufnahme eines Axialquerschnitts eines Laufstreifens eines erfindungsgemäßen Fahrzeugreifens mit ringförmigen ersten und zweiten Gummikomponenten.

Figur 1 zeigt eine schematische Darstellung einer erfindungsgemäßen Vorrichtung 1 mit einer Trennwand und mit 2 Wing-Komponentenkanälen 25, wobei die Trennwand einen ersten Laufstreifenkanal 2 von einem zweiten Laufstreifenkanal 3 trennt und zur Hinterseite der Vorrichtung 1 hin die Mündungstrennwand 14 bildet, welche die Form einer Rechteckfunktion aufweist. Eine in Figur 1 gezeigt Vorform-Vorrichtung 1 wird im Rahmen der Erfindung auch als Zebra-Leiste bezeichnet. Die beiden Wing-Komponentenkanäle 25 bilden zur Hinterseite der Vorrichtung 1 hin zwei Mündungsöffnungen 26. Der erste Laufstreifenkanal 2 bildet zur Hinterseite der Vorrichtung 1 hin eine erste Mündungsöffnung 4, welche aus mehreren, voneinander getrennten Mündungsöffnungsabschnitten 6 besteht. Der zweite Laufstreifenkanal 3 bildet zur Hinterseite der Vorrichtung 1 hin eine zweite Mündungsöffnung 5, welche aus mehreren, voneinander getrennten Mündungsöffnungsabschnitten 7 besteht. Die Höhe 16 der Mündungsabschnitte 6 der ersten Mündungsöffnung 4 und die Höhe 17 der Mündungsabschnitte 7 der zweiten Mündungsöffnung 5 entsprechen dabei der Höhe 30 des Austrittsbereiches 29, wodurch die in Figur 1 gezeigte Vorrichtung 1 geeignet ist, einen Laufstreifen wie in Figur 3a gezeigt herzustellen. Zudem sind in Figur 1 die vertikaler Richtung 8, die horizontale Richtung 9 und die Extrusionsrichtung 15 gezeigt.

Figur 2 zeigt schematisch wie eine erfindungsgemäße Vorform-Vorrichtung 1 mit vier Extruderköpfen 23 und einer Endleiste 20 während der Extrusion zusammenspielt. Die verschiedenen Komponenten verlassen dabei wie in Figur 2 gezeigt die einzelnen Extruderköpfe 23 in Richtung der erfindungsgemäßen Vorform-Vorrichtung 1 um dann in Extrusionsrichtung 15 in die Endleiste 20 zu gelangen und dort zu einem Kautschukprofile 10, d.h. einem extrudierten unvulkanisierten Endlosstreifen zur Herstellung eines Laufstreifens, ausgeformt zu werden.

Figur 3a zeigt einen Querschnitt eines Laufstreifenabschnittes aus Gummikomponenten 11, wobei die Gummikomponenten 11 in horizontaler Richtung 9 nacheinander aus einer ersten und einer zweiten Kautschukzusammensetzung 12, 13 bestehen. Gezeigt ist auch die vertikaler Richtung 8. Der in Figur 3a gezeigte Laufstreifenabschnitt weist keine Base-Gummikomponente 28 auf.

Figur 3b zeigt einen Querschnitt von Laufstreifenabschnitten 24a, 24b sowie einer Base-Gummikomponente 28, wobei die Trennschicht zwischen den Laufstreifenabschnitten 24a, 24b einen zick-zackartigen Verlauf aufweisen und die Laufstreifenabschnitten 24a, 24b aus einer ersten und einer zweiten Kautschukzusammensetzung 12, 13 bestehen. Gezeigt ist auch die vertikaler Richtung 8 und die vertikale Richtung 9.

Figur 3c zeigt einen Querschnitt von Laufstreifenabschnitten 24a, 24b sowie einer Base-Gummikomponente 28, wobei die Trennschicht zwischen den Laufstreifenabschnitten 24a, 24b einen wellenartige Verlauf aufweisen und die Laufstreifenabschnitten 24a, 24b aus einer ersten und einer zweiten Kautschukzusammensetzung 12, 13 bestehen. Gezeigt ist auch die vertikaler Richtung 8 und die vertikale Richtung 9.

Figur 3c zeigt einen Querschnitt von Laufstreifenabschnitten 24a, 24b sowie einer Base-Gummikomponente 28, wobei die Trennschicht zwischen den Laufstreifenabschnitten 24a, 24b einen Verlauf in Form einer Rechteckfunktion aufweisen und die Laufstreifenabschnitten 24a, 24b aus einer ersten und einer zweiten Kautschukzusammensetzung 12, 13 bestehen. Gezeigt ist auch die vertikaler Richtung 8 und die vertikale Richtung 9.

Figur 4 zeigt schematisch dargestellt einen Querschnitt einer erfindungsgemäßen Vorform-Vorrichtung 1 während des Ausformens eines Extrudats 10, welches aus mehreren Gummikomponenten 11 in Form sich in Extrusionsrichtung 15 erstreckenden Streifen besteht. Die Gummikomponenten 11 bestehen dabei sich in horizontaler Richtung 9 abwechselnden Kautschukzusammensetzungen 12, 13. Dabei wird eine Gummikomponente 11 aus einer ersten Kautschukzusammensetzung 12 stets durch einen Mündungsöffnungsabschnitt 6 der ersten Mündungsöffnung 4 und eine Gummikomponente 11 aus einer zweiten Kautschukzusammensetzung 13 stets durch einen Mündungsöffnungsabschnitt 7 der zweiten Mündungsöffnung 5 geleitet. Die Mündungsöffnungsabschnitte 6, 7 sind dabei durch die Mündungstrennwand 14 voneinander getrennt. In Figur 4 ist auch gezeigt die Stärke 21 der Mündungstrennwand 14, die Breite 18 eines Mündungsöffnungsabschnitte 6 einer ersten Mündungsöffnung 4 und die Breite 19 eines Mündungsöffnungsabschnitte 7 einer zweiten Mündungsöffnung 5.

Figur 5 zeigt eine Röntgenaufnahme eines Axialquerschnitts eines Laufstreifenabschnitts eines nicht-erfindungsgemäßen Fahrzeugreifens mit helixförmigen, d.h. nicht ringförmigen, Gummikomponenten aus einer ersten und zweiten Kautschukzusammensetzung 10, 11, wobei der gezeigte Fahrzeugluftreifen mit dem vorstehend beschriebenen und im Stand der Technik bekannten Strip-Winding-Verfahren hergestellt wurde. Es ist klar erkennbar, dass die Geometrie der nacheinander angeordneten Gummikomponenten 11 nicht so gut kontrolliert werden kann und auch die Oberfläche des gezeigten Laufstreifenabschnitts nicht das gewünschte Verhältnis der Oberflächenanteile an Gummikomponenten 11 aus erster und zweiter Kautschukzusammensetzung 12, 13 aufweist. Gezeigt ist auch die Spulbandagenlage 32 und die Gürtellage 33 des nicht-erfindungsgemäßen Fahrzeugreifens. Gezeigt ist zudem die radiale Richtung 33 und die axiale Richtung 35 des Laufstreifenabschnitts.

Figur 6 zeigt eine Röntgenaufnahme eines Axialquerschnitts eines Laufstreifenabschnitts eines erfindungsgemäßen Fahrzeugreifens mit ringförmigen Gummikomponenten aus einer ersten und zweiten Kautschukzusammensetzung 10, 11, wobei der gezeigte Fahrzeugluftreifen mit dem erfindungsgemäßen Extrusionsverfahren mit der erfindungsgemäßen Vorform-Vorrichtung hergestellt wurde, bei dem Endlos-Streifen mit in Extrusionsrichtung parallel verlaufenden verschiedenen Gummikomponenten hergestellt werden können. Es ist klar erkennbar, dass die Geometrie der nacheinander angeordneten Gummikomponenten 11 gut kontrolliert werden kann und auch die Oberfläche des gezeigten Laufstreifenabschnitts das gewünschte Verhältnis der Oberflächenanteile an erster und zweiter Kautschukzusammensetzung 12, 13 aufweist. Das gewünschte Verhältnis an Oberflächenanteile an Gummikomponenten 11 aus erster und zweiter Kautschukzusammensetzung 12, 13 entspricht erfindungsgemäß stets dem Gewichtsanteil der ersten und zweiten Kautschukzusammensetzung im Laufstreifens eines erfindungsgemäßen Fahrzeugreifens. Gezeigt ist auch die Spulbandagenlage 32 und die Gürtellage 33 des nicht-erfindungsgemäßen Fahrzeugreifens. Gezeigt ist zudem die radiale Richtung 33 und die axiale Richtung 35 des Laufstreifenabschnitts.

### Experimentelle Daten:

### Messmethoden:

### 1. Mooney-Viskosität

Die Ergebnisse wurden gemäß ASTM D1646 im Modus [ML 1+3] bei 100 °C ermittelt.

### 2. Rollwiderstand

Die Ergebnisse wurden in Anlehnung an die Methode ISO 28580 ermittelt.

### 3. Fahrverhalten auf schneebedeckter Fahrbahn

Bei dem Test "Fahrverhalten auf schneebedeckter Fahrbahn" wird herausgefunden, ob ein Fahrzeug im Zusammenhang mit Fahrbahnbelag und Wetterbedingungen eine gute Bodenhaftung und eine gute Bremskraft aufweist. Die erfindungsgemäße Fahrzeugreifen mit einer üblichen Reifengröße von 205/55 R16 wurden auf ein mit ABS ausgestattetes Fahrzeug der Marke Volvo, Modell V60 T6R montiert. Sowohl die Vorderreifen als auch die Hinterreifen wurden auf einen Luftdruck von 230 kPa aufgepumpt. Das Fahrverhalten wurde auf einer Asphaltstraßenoberfläche mit einer Schneetiefe von 2 bis 3 mm ermittelt. Dabei wurden das Geradeaus-Fahren, das Lenkverhalten, die Seitenführung der Hinterachse, der Fahrspurwechsel und der Grip der Reifen bewertet und als Indexwerte erfasst und in Vergleichswerte umgerechnet. Hierbei bedeuten Werte mit <100% eine Verschlechterung der jeweiligen Eigenschaft, d.h. schlechteres Fahrverhalten, und Werte mit > 100% eine Verbesserung, d.h. besseres Fahrverhalten, zugeordnet.

Die vorstehend beschriebene Testmethode zum Fahrverhalten der hergestellten Reifen ist dem Fachmann auch als "ADAC Reifentest" bekannt und ist beim ADAC mit der Methodennummer "07.03.2900" oder "IN 26272" im Abschnitt "Schnee (nur bei Winterreifen)" beschrieben.

### Experimentelle Daten für einen Endlos-Streifen zur Herstellung eines erfindungsgemäßen Fahrzeugluftreifens:

Herstellung des Endlos-Streifens zur Herstellung eines erfindungsgemäßen Fahrzeugluftreifens:
Kautschukzusammensetzungen:

**Tabelle ES1: Mischungsbestandteile der zur Herstellung eines erfindungsgemäßen Fahrzeugluftreifens verwendeten Kautschukmischungen**

| Bestandteil | Einheit | Mischstufe | Mischung A1 | Mischung A2 | Mischung A3 | Mischung A4 |
|---|---|---|---|---|---|---|
| NR | phr | 1 | 20 | 60 | 17 | 80 |
| IR | phr | 1 | 5 | --- | --- | 20 |
| BR | phr | 1 | 60 | 20 | --- | --- |
| SBR | phr | 1 | 15 | 20 | 83 | --- |
| Ruß | phr | 1 | 3 | 83 | --- | 45 |
| Silica | phr | 1 | 95 | --- | 91 | 5 |
| Harz | phr | 1 | --- | 3 | 7 | 1 |
| Weichmacher^{b)} | phr | 1 | 50 | 32 | 4 | 9 |
| Silan | phr | 1 | 8 | --- | 9 | 1 |
| Zusatzstoffe^{a)} | phr | 1 | 13 | 8 | 16 | 10 |
| Schwefel und Vulkanisationsbeschleuniger | phr | 2 | 5 | 4 | 4 | 5 |

| | | | | | | |
|---|---|---|---|---|---|---|
| a) Zusatzstoffe: Alterungsschutzmittel, Zinkoxid, Stearinsäure b) MES, Öl, TDAE | | | | | | |

Die Herstellung der verwendeten Kautschukmischung zur Herstellung der erfindungsgemäßen Reifen erfolgt nach dem in der Kautschukindustrie üblichen Verfahren, bei dem zunächst in ein oder mehreren Mischstufen eine Grundmischung mit allen Bestandteilen (s. Tabelle ES1) außer dem Vulkanisationssystem hergestellt wird. Durch Zugabe des Vulkanisationssystems (s. Tabelle ES1) in einer letzten Mischstufe wird die Fertigmischung erzeugt. Die Fertigmischung wird dann gemäß eines erfindungsgemäßen Extrusionsverfahrens und mit den in Tabelle ES2 und ES3 angegebenen Parameters zu einem Endlosstreifen extrudiert. Der Endlosstreifen wird anschließend zu einer Cap eines Laufstreifens zugeschnitten und wie nachstehend noch detaillierter beschrieben mit weiteren Reifenkomponenten zu einem Fahrzeugluftreifen mit einem ausschließlich eine Cap umfassenden Laufstreifen mit mindestens zwei in axialer Richtung nacheinander angeordneten Gummikomponenten weiterverarbeitet.

Wenn ein erfindungsgemäßer Fahrzeugluftreifen hergestellt wurde, so wurde nach der Extrusion eine erfindungsgemäße Vorform-Vorrichtung wie in Figur 1 dargestellt mit einer Endform-Vorrichtung zum Ausformen eines Extrudats zur Herstellung eines erfindungsgemäßen Fahrzeugluftreifens verwendet und
- der erste Laufstreifenkanal der erfindungsgemäßen Vorform-Vorrichtung wurde erfindungsgemäß mit einer ersten Kautschukmischung
   sowie
- der zweite Laufstreifenkanal der erfindungsgemäßen Vorform-Vorrichtung wurde erfindungsgemäß mit einer zweiten Kautschukmischung mit einer von der ersten Kautschukmischung verschiedenen Zusammensetzung
gefüttert (vgl. Kautschukmischung A3 mit Kautschukmischung A4 in Spalte "Zebra-Leiste" in Tabelle ES2 und Kautschukmischung A1 mit Kautschukmischung A2 sowie Kautschukmischung A3 mit Kautschukmischung A4 in Tabelle ES3). Auf diese Weise entstand ein Extrudat in Form eines Endlos-Streifens, welcher aus parallel in Förderrichtung verlaufenden Streifen aus der ersten und der zweiten Kautschukmischung bestand.

Wenn ein nicht-erfindungsgemäßer Fahrzeugluftreifen hergestellt wurde, so wurde nach der Extrusion eine nicht-erfindungsgemäße Standard-Vorleiste mit einer Endform-Vorrichtung zum Ausformen eines Extrudats zur Herstellung eines nicht-erfindungsgemäßen Fahrzeugluftreifens verwendet, wobei die Standard-Vorleiste eine erste rechteckige in horizontale Richtung längliche Mündungsöffnung für die obere Hälfte der Cap-Komponente und eine zweite rechteckige in horizontale Richtung längliche Mündungsöffnung für die untere Hälfte der Cap-Komponente aufwies.

Nach dem Zuschneiden des ausgeformten Extrudats wie vorstehend beschrieben wurde das zugeschnittene Extrudat zusammen mit weiteren standardmäßigen Rohreifenbestandteilen zu einem Reifenrohling weiterverarbeitet, welcher dann in eine entsprechende Vulkanisationsform gebracht wurde.

Anschließend erfolgt die Weiterverarbeitung durch die Vulkanisation, wobei aufgrund des im Rahmen der vorliegenden Erfindung zugegebenen Vulkanisationssystems eine Schwefelvernetzung stattfindet und ein erfindungsgemäßer oder nicht-erfindungsgemäßer Fahrzeugluftreifen entsteht.

### Experimentelle Ergebnisse zu einem erfindungsgemäßen Herstellungsverfahren:

**Tabelle ES2: Vergleich der zur Herstellung eines Laufstreifens eines Fahrzeugluftreifens verwendeten Extrusionsparameter mit den Kautschukmischungen aus Tabelle ES1 mittels einer nicht-erfindungsgemäßen Standard-Vorleiste und einer erfindungsgemäßen Vorform-Vorrichtung, d.h. "Zebra-Leiste".**

| **Vorleiste** | **Mischung** | A3 | A4 |
|---|---|---|---|
| **Standard** (Vergleichsversuch) | Temperatur im Extruderkopf (°C) | 127 | 94 |
| | Druck im Extruderkopf (bar) | 93 | 79 |
| | Extrusionsgeschwindigkeit des Extruderkopfes (m/min) | 19 | 19 |
| **Zebra (erfind.-gemäße Vorleiste)** | Temperatur im Extruderkopf (°C) | 125 | 105 |
| | Druck im Extruderkopf (bar) | 162 | 122 |
| | Extrusionsgeschwindigkeit des Extruderkopfes (m/min) | 17 | 17 |

Über die gesamte Extrusionszeit waren jeweils die Extrusionsgeschwindigkeit der Extruderköpfe, die Temperatur und der Druck in den Extruderköpfen und somit auch das Metergewicht und die Profilbreite des nach der Endleiste resultierenden Profils sehr stabil. Sowohl bei der Herstellung in einer Standard-Vorleiste als auch bei der Herstellung in einer Zebra-Vorleiste lagen die Abweichungen im Metergewicht innerhalb des Sollwerts.

Somit kann aufgrund der Erhöhung des Druckes in den Extruderköpfen trotz der engen Mündungsöffnungsabschnitte der erfindungsgemäßen Vorform-Vorrichtung eine ausreichend große Extrusionsgeschwindigkeit sichergestellt werden, ohne dass dabei zu hohe Temperaturen erreicht werden (vgl. die Werte "127 °C" und "93 bar" zur Mischung A3 in der Standradleiste in Tabelle 2 mit den Werte "125 °C" und "162 bar" zur Mischung A3 in der Zebra-Leiste in Tabelle 2). Das durch die Druckerhöhung eine ausreichende Extrusionsgeschwindigkeit erreicht werden kann, ohne dass die Temperatur der extrudierten Kautschukmischung teilweise anvulkanisiert oder sogar gar nicht erhöht wird (vgl. Temperaturen zur Mischung A3 in Tabelle 2), hätte der Fachmann nicht erwartet.

**Tabelle ES3: Die während der Herstellung eines erfindungsgemäßen Fahrzeugluftreifens verwendeten Extrusionsparameter der Kautschukmischungen aus Tabelle ES 1**

| **Versuchsart:** | **Mit Zebra-Vorleiste (erfindungsgemäß)** | | **Mit Zebra-Vorleiste (erfindungsgemäß)** | |
|---|---|---|---|---|
| **Mischung:** | **A1** | **A2** | **A3** | **A4** |
| Temperatur im Extruderkopf (°C) | 97 | 97 | 125 | 105 |
| Druck im Extruderkopf (bar) | 140 | 130 | 162 | 122 |
| Mooney-Viskosität [ML 1+3] (MU) | 42 | 59 | 81 | 49 |
| Extrusionsgeschwindigkeit des Extruderkopfes (m/min) | 17 | 17 | 17 | 17 |

Überraschenderweise wurden trotz unterschiedlicher Viskositäten der verwendeten Kautschukzusammensetzungen und trotz der erhöhten Drücke im Bereich von 122 bar bis 162 bar keine zu hohen Temperaturen von über 150 °C in den Extruderköpfen gemessen. Dies bedeutet, dass eine Extrusion durch eine erfindungsgemäße Vorform-Vorrichtung erfolgen kann, ohne dass die extrudierte Kautschukmischung bereits teilweise vulkanisiert wird, d.h. ein sogenannter Pre-Scorch stattfindet. Auch hier lagen die Abweichungen im Metergewicht die Abweichungen im Metergewicht innerhalb des Sollwerts.

### Experimentelle Ergebnisse zu einem erfindungsgemäßen Fahrzeugluftreifen:

Die Herstellung der in Tabelle R2 ausgewerteten nicht-erfindungsgemäßen und erfindungsgemäßen Fahrzeugluftreifen erfolgte wie vorstehend im Kapitel "Experimentelle Ergebnisse zu einem erfindungsgemäßen Herstellungsverfahren" für die erfindungsgemäßen Fahrzeugluftreifen angegeben, wobei die Kautschukmischungen aus Tabelle R1 und eine erfindungsgemäße Vorform-Vorrichtung verwendet wurden.

**Tabelle R1: Mischungsbestandteile der zur Herstellung eines erfindungsgemäßen Fahrzeugluftreifens verwendeten Kautschukmischungen und deren Eigenschaften**

| **Bestandteil** | **Einheit** | **Mischstufe** | **Compound A** | **Compound B** |
|---|---|---|---|---|
| | | | | |
| NR | phr | 1 | 38 | 38 |
| BR | phr | 1 | 50 | 50 |
| SBR | phr | 1 | 12 | 12 |
| Ruß | phr | 1 | 10 | 14 |
| Silica | phr | 1 | 73 | 108 |
| Weichmacher^{b)} | phr | 1 | 60 | 55 |
| Silan | phr | 1 | 6,5 | 10,2 |
| Zusatzstoffe^{a)} | phr | 1 | 10 | 10,2 |
| Schwefel und Beschleuniger CBS | phr | 2 | 7 | 6,4 |

| | | | | |
|---|---|---|---|---|
| a) Zusatzstoffe: Alterungsschutzmittel 6PPD, Zinkoxid, Stearinsäure b) TDAE Prozessöl | | | | |

Bei der Herstellung der in Tabelle R2 angegebenen nicht-erfindungsgemäßen Fahrzeugluftreifen (Referenzreifen 1 und Referenzreifen 2) wurde in beide Laufstreifenkanäle der erfindungsgemäßen Vorform-Vorrichtung die gleiche Kautschukmischung geleitet. Somit resultiert je ein nicht-erfindungsgemäßer Fahrzeugluftreifen mit einem Laufstreifen, welcher ausschließlich aus Compound A oder ausschließlich aus Compound B besteht.

Bei der Herstellung des in Tabelle R2 angegebenen erfindungsgemäßen Fahrzeugluftreifen (d.h. "Zebra-Lauftstreifen mit Compound A und Compound B") wurde in den ersten Laufstreifenkanal der erfindungsgemäßen Vorform-Vorrichtung die erste Kautschukmischung (Compound A) und in den zweiten Laufstreifenkanal der erfindungsgemäßen Vorform-Vorrichtung die zweite Kautschukmischung (Compound B) geleitet. Somit resultiert ein erfindungsgemäßer Fahrzeugluftreifen mit einem Laufstreifen, welcher aus länglichen in Umfangsrichtung verlaufenden Streifen besteht, welche abwechselnd aus Compound A und aus Compound B bestehen. Die Rohlinge zur Herstellung eines erfindungsgemäßen und eine nicht-erfindung Fahrzeugluftreifen wurden anschließend bei mindestens 120 °C, genauer gesagt bei 160 °C, vulkanisiert.

**Tabelle R2: Eigenschaften erfindungsgemäßer und nicht-erfindungsgemäßer Fahrzeugluftreifen**

| **Reifeneigenschaften** | Laufstreifen nur mit Compound A (Ref.-Reifen 1) | Laufstreifen nur mit Compound B (Ref.-Reifen 2) | Zebra-Lauftstreifen mit Compound A und Compound B |
|---|---|---|---|
| | Nicht-erfindung. | Nicht-erfindung. | Erfindungsgemäß |
| Reifengröße | 205/55 R16 | 205/55 R16 | 205/55 R16 |
| Gewichtsverhältnis von Compound A zu Compound B | 1:0 | 0:1 | 1:1 |
| Anzahl Streifen aus Compound A* | 26 | 0 | 13 |
| Anzahl Streifen aus Compound B* | 0 | 26 | 13 |

| **Relative Reifenperformance** | | | |
|---|---|---|---|
| Rollwiderstand (%) | 100 | 93 | 97 |
| Fahrverhalten auf Schnee (%) | 100 | 103 | 106 |

| | | | |
|---|---|---|---|
| * Alle Streifen wiesen die gleiche Breite auf. | | | |

Der Referenzreifen 1 stellt den Bezugspunkt für die durchgeführten Experimente dar, d.h. die Messwerte wurden auf 100% normiert. Der Referenzreifen 2 weist im Vergleich zu dem Referenzreifen 1 ein besseres Fahrverhalten auf schneebedeckter Straße aber auch einen höheren Rollwiderstand auf. Die Streifen mit Compound A führen hierbei zu einer deutlichen und unerwarteten Verbesserung des Fahrverhaltens auf Schnee gegenüber beiden Referenzreifen.

Dies verdeutlicht einen der zu lösenden Zielkonflikte gemäß einer Aufgabe der vorliegenden Erfindung, da eine einzige Gummikomponente oder ein einziger Compound nicht gleichzeitig das Fahrverhalten auf schneebedeckter Straße und den Rollwiderstand verbessern kann. Ein erfindungsgemäßer Fahrzeugreifen mit zwei unterschiedlich steifen ringförmigen Gummikomponenten kann somit den Rollwiderstand und gleichzeitig das Fahrverhalten auf schneebedeckter Fahrbahn verbessern. Dies war im Stand der Technik bisher so nicht möglich. Mittels einer erfindungsgemäßen Vorrichtung können somit Fahrzeugreifen hergestellt werden, welche wie vorstehend beschrieben zu bisher nicht erzielten Kombinationen von Eigenschaften führen.

### Bezugszeichenliste:

- 1: Vorform-Vorrichtung; Vorleiste; Pre-Die
- 2: erster Laufstreifenkanal; erster Capkomponenten-Kanal
- 3: zweiter Laufstreifenkanal; zweiter Capkomponenten-Kanal
- 4: erste Mündungsöffnung
- 5: zweite Mündungsöffnung
- 6: Mündungsöffnungsabschnitt der ersten Mündungsöffnung
- 7: Mündungsöffnungsabschnitt der zweiten Mündungsöffnung
- 8: vertikale Richtung
- 9: horizontale Richtung
- 10: Extrudat; extrudierten unvulkanisierten Endlosstreifen zur Herstellung eines Laufstreifens
- 11: in horizontaler Richtung nacheinander angeordneten Gummikomponenten
- 12: erste Kautschukzusammensetzung
- 13: zweite Kautschukzusammensetzung
- 14: Mündungstrennwand
- 15: Extrusionsrichtung
- 16: Höhe eines Mündungsöffnungsabschnitts der ersten Mündungsöffnung in horizontaler Richtung
- 17: Höhe eines Mündungsöffnungsabschnitts der zweiten Mündungsöffnung in horizontaler Richtung
- 18: Breite in vertikaler Richtung eines Mündungsöffnungsabschnitts der ersten Mündungsöffnung
- 19: Breite in vertikaler Richtung eines Mündungsöffnungsabschnitts der zweiten Mündungsöffnung
- 20: Endform-Vorrichtung; Endleiste; Final-Die
- 21: Stärke der Mündungstrennwand
- 22: Extrusionsvorrichtung, Extruder; Quattroplex-Extruder
- 23: Extruderkopf
- 24a: Laufstreifenabschnitt aus der ersten Kautschukzusammensetzung
- 24b: Laufstreifenabschnitt aus der zweiten Kautschukzusammensetzung
- 25: Wing-Komponentenkanal als Beispiel von weiteren Laufstreifenkanälen
- 26: Mündungsöffnung eines Wing-Komponentenkanals
- 27: dritter Laufstreifenkanal; Basekomponenten-Kanal
- 28: Base-Gummikomponente
- 29: Austrittsbereich
- 30: Höhe des Austrittsbereiches
- 31: Breite des Austrittsbereiches
- 32: Spulbandagenlage
- 33: Gürtellage
- 34: radiale Richtung des Laufstreifens
- 35: axiale Richtung des Laufstreifens

## Patentansprüche

1. Vorform-Vorrichtung zur Herstellung eines Laufstreifenabschnittes mit mindestens zwei in horizontaler Richtung (9) nacheinander angeordneten Gummikomponenten (11), umfassend zumindest
- einen ersten Laufstreifenkanal (2) mit einer ersten Mündungsöffnung (4), wobei die erste Mündungsöffnung (4) einen, zwei, drei, vier, fünf, sechs, sieben, acht, neun oder mehr als neun Mündungsöffnungsabschnitte (6) aufweist,
und
- einen zweiten Laufstreifenkanal (3) mit einer zweiten Mündungsöffnung (5), wobei die zweite Mündungsöffnung (5) einen, zwei, drei, vier, fünf, sechs, sieben, acht, neun oder mehr als neun Mündungsöffnungsabschnitte (7) aufweist,
wobei ein horizontaler Querschnitt der Vorform-Vorrichtung (1)
- in horizontaler Richtung (9) nacheinander angeordnete Mündungsöffnungsabschnitte (6, 7) aufweist, wobei die in horizontaler Richtung (9) nacheinander angeordneten Mündungsöffnungsabschnitte (6, 7) alternierend zur ersten und zur zweiten Mündungsöffnung (4, 5) gehören,
oder
- in horizontaler Richtung (9) nacheinander angeordnete Laufstreifenkanalabschnitte aufweist, wobei die in horizontaler Richtung (9) nacheinander angeordneten Laufstreifenkanalabschnitte alternierend zum ersten und zum zweiten Laufstreifenkanal (2, 3) gehören,
wobei die einzelnen Mündungsöffnungsabschnitte (6) der ersten Mündungsöffnung (4) von den einzelnen Mündungsöffnungsabschnitten (7) der zweiten Mündungsöffnung (5) durch eine Mündungstrennwand (14) räumlich getrennt sind, **dadurch gekennzeichnet, dass** die Mündungstrennwand (14) eine wellenartige oder zig-zag-artige Form oder die Form einer Rechteck-Funktion aufweist.

2. Vorform-Vorrichtung nach Anspruch 1, wobei ein horizontaler Querschnitt der Vorform-Vorrichtung (1)
- in horizontaler Richtung (9) nacheinander angeordnete Laufstreifenkanalabschnitte aufweist, wobei die in horizontaler Richtung (9) nacheinander angeordneten Laufstreifenkanalabschnitte alternierend zum ersten und zum zweiten Laufstreifenkanal (2, 3) gehören,
und
- in horizontaler Richtung (9) nacheinander angeordnete Mündungsöffnungsabschnitte (6, 7) aufweist, wobei die in horizontaler Richtung (9) nacheinander angeordneten Mündungsöffnungsabschnitte (6, 7) alternierend zur ersten und zur zweiten Mündungsöffnung (4, 5) gehören.

3. Vorform-Vorrichtung nach einem der vorangehenden Ansprüche, wobei umfassend zumindest:
- einen ersten Laufstreifenkanal (2) mit einer ersten Mündungsöffnung (4), wobei die erste Mündungsöffnung (4) einen, zwei, drei, vier, fünf, sechs, sieben, acht, neun oder mehr als neun Mündungsöffnungsabschnitte (6) aufweist,
und
- einen zweiten Laufstreifenkanal (3) mit einer zweiten Mündungsöffnung (5), wobei die zweite Mündungsöffnung (5) einen, zwei, drei, vier, fünf, sechs, sieben, acht, neun oder mehr als neun Mündungsöffnungsabschnitte (7) aufweist,
wobei mindestens ein Mündungsöffnungsabschnitt (6) der ersten Mündungsöffnung (4) von mindestens zwei Mündungsöffnungsabschnitten (7) der zweiten Mündungsöffnung (5) begrenzt wird und/oder mindestens ein Mündungsöffnungsabschnitt (7) der zweiten Mündungsöffnung (5) von mindestens zwei Mündungsöffnungsabschnitten (6) der ersten Mündungsöffnung (4) begrenzt wird.

4. Vorform-Vorrichtung nach einem der vorangehenden Ansprüche, wobei
- mindestens zwei, mindestens drei oder sämtliche Laufstreifenkanalabschnitte des ersten Laufstreifenkanals (2) und mindestens zwei, mindestens drei oder sämtliche Laufstreifenkanalabschnitte des zweiten Laufstreifenkanals (3) sich in Extrusionsrichtung (15) parallel zueinander erstrecken
und/oder
- der eine Mündungsöffnungsabschnitt (6), die mindestens zwei, mindestens drei oder sämtliche Mündungsöffnungsabschnitte (6) der ersten Mündungsöffnung (4) und der eine Mündungsöffnungsabschnitt (7), die mindestens zwei, mindestens drei oder sämtliche Mündungsöffnungsabschnitte (7) der zweiten Mündungsöffnung (5) eine Höhe (16, 17) in horizontaler Richtung (9) im Bereich von 1 mm bis 500 mm aufweisen, bevorzugt im Bereich von 2 mm bis 250 mm, besonders bevorzugt im Bereich von 5 mm bis 100 mm.

5. Vorform-Vorrichtung nach einem der vorangehenden Ansprüche, wobei ein Querschnitt eines oder des einen oder mindestens eines Mündungsöffnungsabschnitts (6, 7) der ersten und/oder zweiten Mündungsöffnung (4, 5) eine trapezförmige Fläche aufweist, wobei die beiden Seitenkanten der trapezförmigen Fläche bevorzugt mit der horizontalen Richtung (9) eine Trapezwinkel im Bereich von1° bis 10° oder 45° bis 135° bilden und die obere Kante und die untere Kante der trapezförmigen Fläche bevorzugt parallel zur horizontalen Richtung (9) sind.

6. Vorform-Vorrichtung nach einem der vorangehenden Ansprüche, wobei
- der eine oder der mindestens eine Mündungsöffnungsabschnitt (6) der ersten Mündungsöffnung (4)
und/oder
- der eine oder der mindestens ein Mündungsöffnungsabschnitt (7) der zweiten Mündungsöffnung (5)
eine Breite (18, 19) in horizontale Richtung (9) im Bereich von 0,1 mm bis 70 mm aufweist, bevorzugt im Bereich von 0,5 bis 40 mm, besonders bevorzugt im Bereich von 0,5 bis 25 mm, ganz besonders bevorzugt im Bereich von 1 bis 10 mm.

7. Vorform-Vorrichtung nach einem der vorangehenden Ansprüche, wobei die Mündungstrennwand (14) eine Stärke (21) im Bereich von 0,1 mm bis 10 mm aufweist, bevorzugt im Bereich von 0,5 bis 3 mm.

8. Vorform-Vorrichtung nach einem der vorangehenden Ansprüche, wobei mindestens eine oder jede Mündungsöffnung (6, 7) der ersten und zweiten Mündungsöffnung (4, 5) sowie bevorzugt jede Mündungsöffnung (26) weiterer Laufstreifenkanäle (27) einen Austrittsbereich (29) mit einer Höhe (30) in vertikale Richtung (8) und mit einer Breite (31) in horizontaler Richtung (9) bilden und
- die Höhe (16, 17) der Mündungsöffnungsabschnitte (6, 7) der ersten und/oder zweiten Mündungsöffnung (4, 5) im Bereich von 50 % bis 100 % der Höhe (30) des Austrittsbereiches (29) entspricht, bevorzugt im Bereich von 80 % bis 100 %, besonders bevorzugt im Bereich von 90 % bis 100 %, ganz besonders bevorzugt genau 100% der Höhe (30) des Austrittsbereiches (29),
und/oder
- die Breite (18, 19) der Mündungsöffnungsabschnitte (6, 7) der ersten und/oder zweiten Mündungsöffnung (4, 5) im Bereich von 0,1 % bis 35 % der Breite (31) des Austrittsbereiches (29) entspricht, bevorzugt im Bereich von 0,1 % bis 20 %, besonders bevorzugt im Bereich von 0,1 % bis 10 %, ganz besonders bevorzugt im Bereich von 0,1 % bis 5 %.

9. Verwendung einer Vorform-Vorrichtung (1) nach einem der Ansprüche 1 bis 8 zur Herstellung eines Laufstreifenabschnittes mit mindestens zwei in horizontaler Richtung (9) nacheinander angeordneten Gummikomponenten (11) oder zur Herstellung eines Laufstreifenabschnittes mit einem Profilquerschnitt mit mindestens zwei, mindestens drei oder mindestens vier in horizontaler Richtung nacheinander angeordneten Gummikomponenten (11) in Form von sich in Extrusionsrichtung (15) erstreckenden Streifen (24a, 24b) hergestellt werden kann.

10. Verfahren zur Herstellung eines Fahrzeugluftreifens mit einem Laufstreifenabschnitt mit mindestens zwei Gummikomponenten, umfassen die folgenden Schritte:
A) Herstellen oder Bereitstellen einer ersten Kautschukmischung (12),
B) Herstellen oder Bereitstellen einer zweiten Kautschukmischung (13),
C) Extrudieren der ersten Kautschukmischung (12) durch einen ersten Extruderkopf (23),
D) Extrudieren der zweiten Kautschukmischung (13) durch einen zweiten Extruderkopf (23),
E) Leiten der ersten Kautschukmischung (12) durch den ersten Laufstreifenkanal (2) einer Vorform-Vorrichtung nach den Ansprüchen 1 bis 8 und Leiten der zweiten Kautschukmischung (13) durch den zweiten Laufstreifenkanal (3) einer Vorform-Vorrichtung nach den Ansprüchen 1 bis 8, sodass ein Extrudat (10) mit mindestens zwei, mindestens drei oder mindestens vier in horizontaler Richtung (9) nacheinander angeordneten Gummikomponenten (11) in Form von sich in Extrusionsrichtung (15) erstreckenden Streifen resultiert,
F) Weiterverarbeiten des daraus resultierenden Laufstreifens oder des Extrudats (10) mit mindestens zwei in horizontaler Richtung (9) nacheinander angeordneten Gummikomponenten (11) und weiteren Reifenkomponenten zu einem Fahrzeugluftreifen mit einem Laufstreifen mit mindestens zwei in axialer Richtung (35) nacheinander angeordneten und sich in Umfangsrichtung erstreckende Gummikomponenten.

11. Verfahren nach Anspruch 10, wobei der Schritt F) ersetzt wird durch die folgenden Schritte G) und H):
G) Schneiden des Extrudats (10) mit mindestens zwei in horizontaler Richtung (9) nacheinander angeordneten Gummikomponenten (11) in einem Schneidewinkel β, sodass gleich lange Extrudatstücke resultieren, und Drehen der gleich langen Extrudatstücke um den Schneidewinkel β und Verbinden der um den Schneidewinkel β gedrehten Extrudatstücke an den ungeschnittenen Seitenkannten der Extrudatstücke, sodass ein Laufstreifenabschnitt mit mindestens zwei, zur Extrusionsrichtung (15) um den Schneidewinkel β gedrehte, nacheinander angeordneten Gummikomponenten resultiert, und
H) Weiterverarbeiten des Laufstreifenabschnittes mit mindestens zwei, zur Extrusionsrichtung (15) um den Schneidewinkel β gedrehte, nacheinander angeordneten Gummikomponenten und weiteren Reifenkomponenten zu einem Fahrzeugluftreifen mit einem Laufstreifen mindestens zwei, zur Umfangsrichtung (15) um den Schneidewinkel β gedrehte, nacheinander angeordneten Gummikomponenten.

12. Verfahren nach Anspruch 10 oder Anspruch 11, wobei während des Extrudierens im Schritt C) und/oder Schritt D)
- eine Temperatur im Bereich von 97 °C bis 125 °C in dem ersten und/oder zweiten Extruderkopf (23) vorliegt, bevorzugt im Bereich von 105 °C bis 125 °C,
und/oder
- ein Druck im Bereich von 100 bar bis 200 bar in dem ersten und/oder zweiten Extruderkopf (23) vorliegt, bevorzugt im Bereich von 120 bar bis 170 bar,
und/oder
- eine Kautschukmischung als erste oder zweite Kautschukmischung (12, 13) oder zwei Kautschukmischungen als erste und zweite Kautschukmischung (12, 13) verwendet werden, wobei die eine oder die zwei Kautschukmischungen (12, 13) eine Mooney-Viskosität (ML 1+3) bei 20 °C im Bereich von 30 MU bis 100 MU aufweisen, bevorzugt im Bereich von 45 MU bis 90 MU, besonders bevorzugt im Bereich von 55 MU bis 85 MU.

13. Fahrzeugluftreifen
- hergestellt oder herstellbar nach einem Verfahren nach einem der Ansprüche 10 bis 12
und/oder
- umfassend einen Laufstreifenabschnitt mit einem Axialquerschnitt, wobei der Axialquerschnitt des Laufstreifens mindestens zwei in Umfangsrichtung nacheinander angeordnete Gummikomponenten (11) aufweist, wobei die nacheinander angeordneten Gummikomponenten (11) des Laufstreifens alternierend aus mindestens einer ersten und einer zweiten Kautschukzusammensetzung (12, 13) bestehen, wobei die erste Kautschukzusammensetzung (13) sich bevorzugt von der zweiten Kautschukzusammensetzung (13) unterscheidet.

14. Verwendung einer Vorform-Vorrichtung nach einem der Ansprüche 1 bis 8 zur Herstellung eines Fahrzeugluftreifens nach Anspruch 13 oder zur Herstellung eines Laufstreifenabschnittes mit einem Axialquerschnitt, wobei der Axialquerschnitt des Laufstreifens mindestens zwei in Umfangsrichtung nacheinander angeordnete Gummikomponenten (11) aufweist, wobei die nacheinander angeordneten Gummikomponenten (11) des Laufstreifens alternierend aus mindestens einer ersten und einer zweiten Kautschukzusammensetzung (12, 13) bestehen, wobei die erste Kautschukzusammensetzung (13) sich bevorzugt von der zweiten Kautschukzusammensetzung (13) unterscheidet.

## Claims

1. Preform device for producing a tread portion having at least two rubber components (11) arranged in series in a horizontal direction (9), comprising at least
- a first tread channel (2) with a first mouth opening (4), the first mouth opening (4) having one, two, three, four, five, six, seven, eight, nine or more than nine mouth opening portions (6), and
- a second tread channel (3) with a second mouth opening (5), the second mouth opening (5) having one, two, three, four, five, six, seven, eight, nine or more than nine mouth opening portions (7),
wherein a horizontal cross section of the preform device (1)
- has mouth opening portions (6, 7) arranged in series in the horizontal direction (9), the mouth opening portions (6, 7) arranged in series in the horizontal direction (9) alternately belonging to the first and to the second mouth opening (4, 5),
or
- has tread channel portions arranged in series in the horizontal direction (9), the tread channel portions arranged in series in the horizontal direction (9) alternately belonging to the first and to the second tread channel (2, 3), wherein the individual mouth opening portions (6) of the first mouth opening (4) are spatially separated from the individual mouth opening portions (7) of the second mouth opening (5) by a mouth partition (14), **characterized in that** the mouth partition (14) has a wave-like or zigzag-like form or the form of a rectangle function.

2. Preform device according to Claim 1, wherein a horizontal cross section of the preform device (1)
- has tread channel portions arranged in series in the horizontal direction (9), the tread channel portions arranged in series in the horizontal direction (9) alternately belonging to the first and to the second tread channel (2, 3),
and
- has mouth opening portions (6, 7) arranged in series in the horizontal direction (9), the mouth opening portions (6, 7) arranged in series in the horizontal direction (9) alternately belonging to the first and to the second mouth opening (4, 5).

3. Preform device according to either of the preceding claims, comprising at least:
- a first tread channel (2) with a first mouth opening (4), the first mouth opening (4) having one, two, three, four, five, six, seven, eight, nine or more than nine mouth opening portions (6),
and
- a second tread channel (3) with a second mouth opening (5), the second mouth opening (5) having one, two, three, four, five, six, seven, eight, nine or more than nine mouth opening portions (7), wherein at least one mouth opening portion (6) of the first mouth opening (4) is delimited by at least two mouth opening portions (7) of the second mouth opening (5) and/or at least one mouth opening portion (7) of the second mouth opening (5) is delimited by at least two mouth opening portions (6) of the first mouth opening (4).

4. Preform device according to one of the preceding claims, wherein
- at least two, at least three or all the tread channel portions of the first tread channel (2) and at least two, at least three or all the tread channel portions of the second tread channel (3) extend parallel to one another in an extrusion direction (15)
and/or
- the one mouth opening portion (6), the at least two, at least three or all the mouth opening portions (6) of the first mouth opening (4) and the one mouth opening portion (7), the at least two, at least three or all the mouth opening portions (7) of the second mouth opening (5) have a height (16, 17) in the horizontal direction (9) in the range from 1 mm to 500 mm, preferably in the range from 2 mm to 250 mm, particularly preferably in the range from 5 mm to 100 mm.

5. Preform device according to one of the preceding claims, wherein a cross section of a or the one or at least one mouth opening portion (6, 7) of the first and/or second mouth opening (4, 5) has a trapezoidal area, wherein the two side edges of the trapezoidal area preferably form, with the horizontal direction (9), a trapezium angle in the range from 1 ° to 10° or 45° to 135° and the upper edge and the lower edge of the trapezoidal area are preferably parallel to the horizontal direction (9).

6. Preform device according to one of the preceding claims, wherein
- the one or the at least one mouth opening portion (6) of the first mouth opening (4)
and/or
- the one or the at least one mouth opening portion (7) of the second mouth opening (5)
have/has a width (18, 19) in the horizontal direction (9) in the range from 0.1 mm to 70 mm, preferably in the range from 0.5 to 40 mm, particularly preferably in the range from 0.5 to 25 mm, very particularly preferably in the range from 1 to 10 mm.

7. Preform device according to one of the preceding claims, wherein the mouth partition (14) has a thickness (21) in the range from 0.1 mm to 10 mm, preferably in the range from 0.5 to 3 mm.

8. Preform device according to one of the preceding claims, wherein at least one or each mouth opening (6, 7) of the first and second mouth opening (4, 5) and preferably each mouth opening (26) of further tread channels (27) form an exit region (29) with a height (30) in a vertical direction (8) and with a width (31) in the horizontal direction (9) and
- the height (16, 17) of the mouth opening portions (6, 7) of the first and/or second mouth opening (4, 5) corresponds to the height (30) of the exit region (29) in the range from 50% to 100%, preferably in the range from 80% to 100%, particularly preferably in the range from 90% to 100%, very particularly preferably corresponds to the height (30) of the exit region (29) exactly 100%, and/or
- the width (18, 19) of the mouth opening portions (6, 7) of the first and/or second mouth opening (4, 5) corresponds to the width (31) of the exit region (29) in the range from 0.1% to 35%, preferably in the range from 0.1% to 20%, particularly preferably in the range from 0.1% to 10%, very particularly preferably in the range from 0.1% to 5%.

9. Use of a preform device (1) according to one of Claims 1 to 8 for producing a tread portion having at least two rubber components (11) arranged in series in the horizontal direction (9) or for producing a tread portion with a profile cross section having at least two, at least three or at least four rubber components (11) arranged in series in the horizontal direction in the form of strips (24a, 24b) extending in the extrusion direction (15).

10. Method for producing a pneumatic vehicle tyre with a tread portion having at least two rubber components, comprising the following steps:
A) producing or providing a first rubber mixture (12),
B) producing or providing a second rubber mixture (13),
C) extruding the first rubber mixture (12) through a first extruder head (23),
D) extruding the second rubber mixture (13) through a second extruder head (23),
E) directing the first rubber mixture (12) through the first tread channel (2) of a preform device according to Claims 1 to 8 and directing the second rubber mixture (13) through the second tread channel (3) of a preform device according to Claims 1 to 8, such that an extrudate (10) having at least two, at least three or at least four rubber components (11) arranged in series in the horizontal direction (9) in the form of strips extending in the extrusion direction (15) results,
F) further processing the resultant tread or the extrudate (10) having at least two rubber components (11) arranged in series in the horizontal direction (9) and further tyre components to form a pneumatic vehicle tyre with a tread having at least two rubber components that are arranged in series in an axial direction (35) and extend in a circumferential direction.

11. Method according to Claim 10, wherein step F) is replaced by the following steps G) and H):
G) cutting the extrudate (10) having at least two rubber components (11) arranged in series in the horizontal direction (9) at a cutting angle β, such that extrudate pieces of equal length result, and rotating the extrudate pieces of equal length by the cutting angle β and connecting the extrudate pieces rotated by the cutting angle β to the uncut side edges of the extrudate pieces, such that a tread portion having at least two serially arranged rubber components that are rotated by the cutting angle β with respect to the extrusion direction (15) results, and
H) further processing the tread portion having at least two serially arranged rubber components that are rotated by the cutting angle β with respect to the extrusion direction (15) and further tyre components to form a pneumatic vehicle tyre with a tread having at least two serially arranged rubber components that are rotated by the cutting angle β with respect to the extrusion direction (15).

12. Method according to Claim 10 or Claim 11, wherein, during the extruding in step C) and/or step D),
- a temperature in the range from 97°C to 125°C, preferably in the range from 105°C to 125°C, is present in the first and/or second extruder head (23), and/or
- a pressure in the range from 100 bar to 200 bar, preferably in the range from 120 bar to 170 bar, is present in the first and/or second extruder head (23), and/or
- use is made of one rubber mixture as first or second rubber mixture (12, 13) or two rubber mixtures as first and second rubber mixture (12, 13), wherein the one or the two rubber mixtures (12, 13) have a Mooney viscosity (ML 1+3) at 20°C in the range from 30 MU to 100 MU, preferably in the range from 45 MU to 90 MU, particularly preferably in the range from 55 MU to 85 MU.

13. Pneumatic vehicle tyre
- produced or producible by a method according to one of Claims 10 to 12 and/or
- comprising a tread portion having an axial cross section, wherein the axial cross section of the tread has at least two rubber components (11) arranged in series in the circumferential direction, the serially arranged rubber components (11) of the tread alternately consisting of at least a first and a second rubber composition (12, 13), the first rubber composition (13) preferably differing from the second rubber composition (13).

14. Use of a preform device according to one of Claims 1 to 8 for producing a pneumatic vehicle tyre according to Claim 13 or for producing a tread portion having an axial cross section, wherein the axial cross section of the tread has at least two rubber components (11) arranged in series in the circumferential direction, the serially arranged rubber components (11) of the tread alternately consisting of at least a first and a second rubber composition (12, 13), the first rubber composition (13) preferably differing from the second rubber composition (13).

## Revendications

1. Dispositif de préforme pour la fabrication d'une section de bande de roulement avec au moins deux composants en caoutchouc (11) agencés l'un après l'autre dans la direction horizontale (9), comprenant au moins
- un premier canal de bande de roulement (2) avec une première ouverture d'embouchure (4), la première ouverture d'embouchure (4) présentant une, deux, trois, quatre, cinq, six, sept, huit, neuf ou plus de neuf sections d'ouverture d'embouchure (6), et
- un deuxième canal de bande de roulement (3) avec une deuxième ouverture d'embouchure (5), la deuxième ouverture d'embouchure (5) présentant une, deux, trois, quatre, cinq, six, sept, huit, neuf ou plus de neuf sections d'ouverture d'embouchure (7),
une section transversale horizontale du dispositif de préforme (1)
- présentant des sections d'ouverture d'embouchure (6, 7) agencées les unes après les autres dans la direction horizontale (9), les sections d'ouverture d'embouchure (6, 7) agencées les unes après les autres dans la direction horizontale (9) appartenant alternativement à la première et à la deuxième ouverture d'embouchure (4, 5),
ou
- présentant des sections de canal de bande de roulement agencées les unes après les autres dans la direction horizontale (9), les sections de canal de bande de roulement agencées les unes après les autres dans la direction horizontale (9) appartenant alternativement au premier et au deuxième canal de bande de roulement (2, 3),
les sections d'ouverture d'embouchure individuelles (6) de la première ouverture d'embouchure (4) étant séparées spatialement des sections d'ouverture d'embouchure individuelles (7) de la deuxième ouverture d'embouchure (5) par une paroi de séparation d'embouchure (14), **caractérisé en ce que** la paroi de séparation d'embouchure (14) présente une forme ondulée ou en zigzag ou la forme d'une fonction rectangulaire.

2. Dispositif de préforme selon la revendication 1, dans lequel une section transversale horizontale du dispositif de préforme (1)
- présente des sections de canal de bande de roulement agencées les unes après les autres dans la direction horizontale (9), les sections de canal de bande de roulement agencées les unes après les autres dans la direction horizontale (9) appartenant alternativement au premier et au deuxième canal de bande de roulement (2, 3),
et
- présente des sections d'ouverture d'embouchure (6, 7) agencées les unes après les autres dans la direction horizontale (9), les sections d'ouverture d'embouchure (6, 7) agencées les unes après les autres dans la direction horizontale (9) appartenant alternativement à la première et à la deuxième ouverture d'embouchure (4, 5).

3. Dispositif de préforme selon l'une quelconque des revendications précédentes, comprenant au moins :
- un premier canal de bande de roulement (2) avec une première ouverture d'embouchure (4), la première ouverture d'embouchure (4) présentant une, deux, trois, quatre, cinq, six, sept, huit, neuf ou plus de neuf sections d'ouverture d'embouchure (6),
et
- un deuxième canal de bande de roulement (3) avec une deuxième ouverture d'embouchure (5), la deuxième ouverture d'embouchure (5) présentant une, deux, trois, quatre, cinq, six, sept, huit, neuf ou plus de neuf sections d'ouverture d'embouchure (7), au moins une section d'ouverture d'embouchure (6) de la première ouverture d'embouchure (4) étant délimitée par au moins deux sections d'ouverture d'embouchure (7) de la deuxième ouverture d'embouchure (5) et/ou au moins une section d'ouverture d'embouchure (7) de la deuxième ouverture d'embouchure (5) étant délimitée par au moins deux sections d'ouverture d'embouchure (6) de la première ouverture d'embouchure (4).

4. Dispositif de préforme selon l'une quelconque des revendications précédentes, dans lequel
- au moins deux, au moins trois ou toutes les sections de canal de bande de roulement du premier canal de bande de roulement (2) et au moins deux, au moins trois ou toutes les sections de canal de bande de roulement du deuxième canal de bande de roulement (3) s'étendent parallèlement les unes aux autres dans la direction d'extrusion (15)
et/ou
- l'une des sections d'ouverture d'embouchure (6), les au moins deux, au moins trois ou toutes les sections d'ouverture d'embouchure (6) de la première ouverture d'embouchure (4) et l'une des sections d'ouverture d'embouchure (7), les au moins deux, au moins trois ou toutes les sections d'ouverture d'embouchure (7) de la deuxième ouverture d'embouchure (5) présentent une hauteur (16, 17) dans la direction horizontale (9) dans la plage de 1 mm à 500 mm, de préférence dans la plage de 2 mm à 250 mm, de manière particulièrement préférée dans la plage de 5 mm à 100 mm.

5. Dispositif de préforme selon l'une quelconque des revendications précédentes, dans lequel une section transversale d'une ou de l'une ou d'au moins une section d'ouverture d'embouchure (6, 7) de la première et/ou de la deuxième ouverture d'embouchure (4, 5) présente une surface trapézoïdale, les deux bords latéraux de la surface trapézoïdale formant de préférence un angle trapézoïdal avec la direction horizontale (9) dans la plage de 1° à 10° ou de 45° à 135°, et le bord supérieur et le bord inférieur de la surface trapézoïdale étant de préférence parallèles à la direction horizontale (9).

6. Dispositif de préforme selon l'une quelconque des revendications précédentes, dans lequel
- l'une ou l'au moins une section d'ouverture d'embouchure (6) de la première ouverture d'embouchure (4)
et/ou
- l'une ou l'au moins une section d'ouverture d'embouchure (7) de la deuxième ouverture d'embouchure (5)
présente une largeur (18, 19) dans la direction horizontale (9) dans la plage de 0,1 mm à 70 mm, de préférence dans la plage de 0,5 à 40 mm, de manière particulièrement préférée dans la plage de 0,5 à 25 mm, de manière tout particulièrement préférée dans la plage de 1 à 10 mm.

7. Dispositif de préforme selon l'une quelconque des revendications précédentes, dans lequel la paroi de séparation d'embouchure (14) présente une épaisseur (21) dans la plage de 0,1 mm à 10 mm, de préférence dans la plage de 0,5 à 3 mm.

8. Dispositif de préforme selon l'une quelconque des revendications précédentes, dans lequel au moins une ou chaque ouverture d'embouchure (6, 7) des première et deuxième ouvertures d'embouchure (4, 5) et de préférence chaque ouverture d'embouchure (26) d'autres canaux de bande de roulement (27) forment une zone de sortie (29) avec une hauteur (30) dans la direction verticale (8) et une largeur (31) dans la direction horizontale (9) et
- la hauteur (16, 17) des sections d'ouverture d'embouchure (6, 7) de la première et/ou de la deuxième ouverture d'embouchure (4, 5) correspond dans la plage de 50 % à 100 % à la hauteur (30) de la zone de sortie (29), de préférence dans la plage de 80 % à 100 %, de manière particulièrement préférée dans la plage de 90 % à 100 %, de manière tout particulièrement préférée exactement 100 % de la hauteur (30) de la zone de sortie (29), et/ou
- la largeur (18, 19) des sections d'ouverture d'embouchure (6, 7) de la première et/ou de la deuxième ouverture d'embouchure (4, 5) correspond dans la plage de 0,1 % à 35 % à la largeur (31) de la zone de sortie (29), de préférence dans la plage de 0,1 % à 20 %, de manière particulièrement préférée dans la plage de 0,1 % à 10 %, de manière tout particulièrement préférée dans la plage de 0,1 % à 5 %.

9. Utilisation d'un dispositif de préforme (1) selon l'une quelconque des revendications 1 à 8 pour la fabrication d'une section de bande de roulement avec au moins deux composants en caoutchouc (11) agencés l'un après l'autre dans la direction horizontale (9) ou pour la fabrication d'une section de bande de roulement avec une section transversale profilée avec au moins deux, au moins trois ou au moins quatre composants en caoutchouc (11) agencés les uns après les autres dans la direction horizontale sous forme de bandes (24a, 24b) s'étendant dans la direction d'extrusion (15).

10. Procédé de fabrication d'un pneumatique de véhicule ayant une section de bande de roulement avec au moins deux composants en caoutchouc, comprenant les étapes suivantes :
A) la fabrication ou la fourniture d'un premier mélange de caoutchouc (12),
B) la fabrication ou la fourniture d'un deuxième mélange de caoutchouc (13),
C) l'extrusion du premier mélange de caoutchouc (12) à travers une première tête d'extrusion (23),
D) l'extrusion du deuxième mélange de caoutchouc (13) à travers une deuxième tête d'extrusion (23),
E) le passage du premier mélange de caoutchouc (12) à travers le premier canal de bande de roulement (2) d'un dispositif de préforme selon les revendications 1 à 8 et le passage du deuxième mélange de caoutchouc (13) à travers le deuxième canal de bande de roulement (3) d'un dispositif de préforme selon les revendications 1 à 8, de telle sorte qu'il en résulte un extrudat (10) avec au moins deux, au moins trois ou au moins quatre composants de caoutchouc (11) agencés les uns après les autres dans la direction horizontale (9) sous forme de bandes s'étendant dans la direction d'extrusion (15),
F) le traitement ultérieur de la bande de roulement ou de l'extrudat (10) qui en résulte avec au moins deux composants en caoutchouc (11) agencés l'un après l'autre dans la direction horizontale (9) et d'autres composants de pneu pour obtenir un pneumatique de véhicule avec une bande de roulement avec au moins deux composants en caoutchouc agencés l'un après l'autre dans la direction axiale (35) et s'étendant dans la direction circonférentielle.

11. Procédé selon la revendication 10, dans lequel l'étape F) est remplacée par les étapes G) et H) suivantes :
G) la coupure de l'extrudat (10) avec au moins deux composants en caoutchouc (11) agencés l'un après l'autre dans la direction horizontale (9) selon un angle de coupe β, de telle sorte qu'il en résulte des pièces d'extrudat de même longueur, et la rotation des pièces d'extrudat de même longueur de l'angle de coupe β et la liaison des pièces d'extrudat tournées de l'angle de coupe β aux bords latéraux non coupés des pièces d'extrudat, de telle sorte qu'il en résulte une section de bande de roulement avec au moins deux composants en caoutchouc agencés l'un après l'autre, tournés de l'angle de coupe β par rapport à la direction d'extrusion (15), et
H) le traitement ultérieur de la section de bande de roulement avec au moins deux composants en caoutchouc agencés l'un après l'autre, tournés de l'angle de coupe β par rapport à la direction d'extrusion (15), et d'autres composants de pneu pour obtenir un pneumatique de véhicule avec une bande de roulement d'au moins deux composants en caoutchouc agencés l'un après l'autre, tournés de l'angle de coupe β par rapport à la direction circonférentielle (15).

12. Procédé selon la revendication 10 ou la revendication 11, dans lequel, pendant l'extrusion dans l'étape C) et/ou l'étape D)
- une température dans la plage de 97 °C à 125 °C est présente dans la première et/ou la deuxième tête d'extrusion (23), de préférence dans la plage de 105 °C à 125 °C, et/ou
- une pression dans la plage de 100 bars à 200 bars est présente dans la première et/ou la deuxième tête d'extrusion (23), de préférence dans la plage de 120 bars à 170 bars, et/ou
- un mélange de caoutchouc est utilisé en tant que premier ou deuxième mélange de caoutchouc (12, 13) ou deux mélanges de caoutchouc sont utilisés en tant que premier et deuxième mélange de caoutchouc (12, 13), le ou les deux mélanges de caoutchouc (12, 13) ayant une viscosité de Mooney (ML 1+3) à 20 °C dans la plage de 30 MU à 100 MU, de préférence dans la plage de 45 MU à 90 MU, de manière particulièrement préférée dans la plage de 55 MU à 85 MU.

13. Pneumatique de véhicule,
- fabriqué ou pouvant être fabriqué par un procédé selon l'une quelconque des revendications 10 à 12
et/ou
- comprenant une section de bande de roulement avec une section transversale axiale, la section transversale axiale de la bande de roulement présentant au moins deux composants en caoutchouc (11) agencés l'un après l'autre dans la direction circonférentielle, les composants en caoutchouc (11) agencés l'un après l'autre de la bande de roulement étant constitués alternativement d'au moins une première et une deuxième composition de caoutchouc (12, 13), la première composition de caoutchouc (13) étant de préférence différente de la deuxième composition de caoutchouc (13).

14. Utilisation d'un dispositif de préforme selon l'une quelconque des revendications 1 à 8 pour la fabrication d'un pneumatique de véhicule selon la revendication 13 ou pour la fabrication d'une section de bande de roulement avec une section transversale axiale, la section transversale axiale de la bande de roulement présentant au moins deux composants en caoutchouc (11) agencés l'un après l'autre dans la direction circonférentielle, les composants en caoutchouc (11) de la bande de roulement agencés l'un après l'autre étant constitués alternativement d'au moins une première et une deuxième composition de caoutchouc (12, 13), la première composition de caoutchouc (13) étant de préférence différente de la deuxième composition de caoutchouc (13).
